# FASCICULE DE BREVET EUROPEEN

(11) **EP 4 063 192 B1**
(45) Date de publication et mention de la délivrance du brevet: **12.07.2023**
(21) Numéro de dépôt: 22164151.7
(22) Date de dépôt: 24.03.2022
(51) Int. Cl.: B60P 3/08

(54) **VEHICULE DE TRANSPORT DE CHARGES COMPORTANT UN ENSEMBLE DE DEPLACEMENT D'UNE CHARGE**
LASTENTRANSPORTFAHRZEUG MIT EINER EINHEIT ZUM BEWEGEN EINER LAST
VEHICLE FOR TRANSPORTING LOADS COMPRISING AN ASSEMBLY FOR MOVING A LOAD

(30) Priorité: 26.03.2021 FR 2103081
(43) Date de publication de la demande: 28.09.2022
(73) Titulaire: Lohr Industrie, 67980 Hangenbieten (FR)
(72) Inventeur: ANDRE, Jean-Luc, 67120 MOLSHEIM (FR); SCHEER, Daniel, 67190 STILL (FR)
(74) Mandataire: Merckling, Norbert

(56) Documents cités:
- EP-B1- 0 418 178
- EP-B1- 3 293 048
- US-A- 4 081 196

## Description

### Domaine technique

La présente invention se rapporte au domaine technique général de la manutention de charges
La présente invention concerne plus particulièrement le domaine technique général des systèmes de levage et d'inclinaison d'un support de charge au-dessus de la cabine d'un véhicule porte-voitures.

### Technique antérieure

La casquette d'un véhicule porte-voitures est un plateau de chargement prévu pour recevoir un véhicule et être positionné au-dessus de la cabine du tracteur du véhicule porte-voitures.

De nos jours, lors du chargement des convois porte-voitures, le chargement de la voiture sur la casquette est une opération à risque et une étape dangereuse du transport de véhicules. En effet, le chargement de la voiture sur la casquette, située au-dessus de la cabine soit à plus de 3 m du sol, demande une grande vigilance.

Sur les convois actuels, les plateaux supérieurs des véhicules porte-voitures, qu'ils s'agissent de camions ou de remorques, sont capables de faire une rampe d'accès pour accéder à la casquette située au-dessus de la cabine.

L'usage de cette rampe permet au chauffeur d'amener la voiture sur la casquette contre une butée ou une cale qui a une hauteur réduite pour ne pas abimer les spoilers. Il doit prendre un peu de vitesse pour monter sur les plateaux et ne pas faire patiner l'embrayage, ce qui nécessite de bien doser l'accélération pour ne pas franchir la butée ou une cale et faire chuter le véhicule après avoir basculé par-dessus la cabine.

Le chargement de voitures sur casquette est la première cause d'accidents mortels sur les parcs de chargement.

En outre, après le chargement d'une voiture sur la casquette, le chauffeur doit pouvoir sortir de ladite voiture et évoluer autour de celle-ci pour l'arrimer. L'espace étant très réduit en raison de la réglementation de la largeur des convois sur route, pour sécuriser les déplacements du chauffeur lors des phases de chargement et déchargement des véhicules il a été nécessaire d'ajouter des garde-corps sur les plateaux supérieurs et/ou des systèmes permettant d'élargir ces plateaux.

Ces solutions sont complexes, onéreuses et difficiles à installer sur les plateaux supérieurs. Elles peuvent même être inefficaces lorsque le véhicule chargé sur la casquette est large.

Il existe donc un besoin pour une solution permettant de mettre en sécurité le chauffeur lors de toutes les phases de chargement et déchargement.

Une de ces solutions consiste à prévoir une casquette mobile.

Par le brevet EP 0418178 B1, on connaît une unité supérieure porte-voitures pour véhicule routier comprenant un plateau porteur mobile entre une position inférieure escamotée derrière la cabine utilisée pour le roulage à vide ou le chargement et une position supérieure utilisée pour le transport dans laquelle le plateau se trouve en configuration d'extension en porte-à-faux au-dessus de la cabine. Le plateau porteur mobile est déplacé verticalement par deux dispositifs de levage à vis intégrés chacun dans un poteau vertical, la vis de chaque dispositif de levage étant en prise avec une douille supérieure reliée de façon articulée à un platelage fixe du plateau porteur et avec une douille inférieure reliée de façon articulée à un platelage fixe du plateau porteur par l'intermédiaire d'une bielle terminée par un patin monté coulissant longitudinalement le long du plateau porteur. Les douilles inférieure et supérieure comprennent des écrous débrayables de manière à régler la distance entre ces douilles et de ce fait de modifier l'inclinaison du plateau porteur. Un vérin de translation intégré au plateau réalise la translation du plateau porteur.

Cette solution présente cependant de nombreux désavantages.

En effet, dans le brevet EP 0418178 B1, le réglage en translation du plateau porteur est effectué au moyen d'un vérin de translation intégré au plateau porteur. Cela augmente le coût et la vulnérabilité aux pannes du plateau porteur et nécessite de fournir de l'énergie, par exemple hydraulique, au plateau porteur pour alimenter le vérin de translation. En outre, de par la cinématique du système d'inclinaison, l'amplitude de réglage de l'inclinaison est très faible et le plateau porteur ne peut pas être positionné dans un plan horizontal, ce qui ne permet pas de le positionner au-dessus de la cabine sans prévoir un logement dans le plateau porteur pour y faire pénétrer la cabine. L'arrière plateau porteur est toujours incliné vers le bas. Ne pas pouvoir relever l'arrière du plateau porteur est désavantageux.

De même, dans le brevet EP 0418178 B1, le plateau porteur comporte un platelage fixe et un platelage mobile, le platelage fixe étant déplacé verticalement le long de deux poteaux verticaux tandis que seul le platelage mobile est apte à être déplacé horizontalement par rapport au platelage fixe. De fait, une partie du plateau porteur ne peut pas être déplacée horizontalement vers la cabine. Il en résulte que le plateau porteur ne peut être positionné autant vers l'avant de la cabine que cela est souhaité pour optimiser le chargement du véhicule porte-voitures. Ainsi, de par sa conception, le plateau porteur du brevet EP 0418178 B1 ne peut pas dépasser à l'avant du véhicule porte-voitures comme cela est autorisé par la législation dans certains pays.

En outre, du fait que le plateau porteur doit être en deux parties coulissantes l'une par rapport à l'autre, le brevet EP 0418178 B1 n'est pas adapté à des plateaux porteurs classiques d'une seule pièce, mais est uniquement adapté à des plateaux porteurs spécifiques, moins robustes et plus onéreux.

Enfin, l'utilisation d'une douille, reliée à une bielle, elle-même reliée à un patin, monté dans une glissière prévue sur les flancs latéraux du plateau porteur constitue un grand nombre de moyens placés à la suite des autres, ce qui génère un encombrement important. Les poteaux verticaux ne pouvant pas être déportés latéralement vers l'extérieur du véhicule, l'encombrement des moyens de levage du brevet EP 0418178 B1 réduit ainsi considérablement la largeur disponible pour le plateau porteur et pour les véhicules transportés.

Pour finir, la course de translation étant limitée pour le plateau porteur du brevet EP 0418178 B1, il n'est pas possible de reculer assez le plateau en position pour charger la voiture derrière la cabine du camion, il faut dételer le tracteur pour charger et décharger.

### Présentation de l'invention

L'objet de la présente invention vise par conséquent à fournir un nouvel ensemble de déplacement d'un support de charge pour un véhicule de transport de charges, par exemple un véhicule porte-voiture, depuis au moins une position limite basse située à l'arrière d'un obstacle présent sur ledit véhicule de transport, par exemple la cabine du véhicule ou une autre charge, vers l'avant jusqu'à au moins une position limite haute située au-dessus de l'obstacle, qui palie aux défauts du dispositif du brevet EP 0418178 B1.

La position limite basse correspond à une hauteur du support de charge à laquelle l'opérateur peut circuler sur ledit support de charge sans qu'il soit nécessaire d'ajouter de dispositif de sécurité, tel un garde-corps, pour respecter les réglementations en vigueur. De façon plus secondaire, il s'agit également d'une hauteur à laquelle l'opérateur peut atteindre une charge prévue sur le support de charge depuis le sol. Il s'agit par exemple d'une hauteur inférieure à 2 mètres du sol.

La position limite haute correspond à une hauteur du support de charge à laquelle l'opérateur ne peut pas circuler sur ledit support de charge sans qu'il soit nécessaire d'ajouter de dispositif de sécurité. De façon plus secondaire, il s'agit également d'une hauteur à laquelle l'opérateur ne peut plus atteindre une charge prévue sur le support de charge depuis le sol. Il s'agit par exemple d'une hauteur supérieure à 3 mètres du sol.

Ainsi l'invention permet de positionner le support de charge à une hauteur suffisamment faible afin qu'il ne soit pas nécessaire d'ajouter de garde-corps pour respecter les règlementations en vigueur, puis, une fois que l'opérateur a fini de manipuler ladite charge, de la déplacer en position haute où toute manipulation de la charge par l'opérateur serait sujette des réglementations, propres à chaque zone géographique, qui régissent le travail en hauteur. La hauteur de 2 mètres n'est qu'un exemple ; elle correspond à la hauteur réglementaire la plus permissive à ce jour, mais elle peut bien sûr évoluer.

Ainsi, cet ensemble de déplacement, en plus d'être fiable, robuste et peu coûteux, doit notamment être adapté à tout type de support de charge (par exemple aux plateaux porteurs classiques d'une seule pièce), doit fournir une grande amplitude de réglage pour l'inclinaison du support de charge et permettre de relever l'arrière du plateau porteur du véhicule de transport de charges, doit permettre de positionner le support de charge au-dessus de la cabine sans risque de collision avec celle-ci et doit permettre d'ajuster en déplacement longitudinal la position du support de charge au-dessus de la cabine ou de la marchandise de sorte, notamment, que le plateau porteur puisse dépasser à l'avant du véhicule porte-voitures, présenter un encombrement minimal de sorte de pouvoir permettre le déplacement et le transport de charge de grande largeur.

Les objets assignés à la présente invention sont atteints à l'aide d'un véhicule de transport de charges comportant un ensemble de déplacement d'une charge apte à faire passer la charge d'une position limite basse située à l'arrière d'un obstacle à une hauteur inférieure à 2 mètres du sol, jusqu'à au moins une position limite haute située à l'avant de la position limite basse et à une hauteur supérieure à celle de l'obstacle, ledit obstacle étant une partie de la structure du véhicule de transport ou une zone de chargement du véhicule susceptible de contenir une autre charge, caractérisé en ce que l'ensemble de déplacement comporte les moyens suivants :
- un support de charge sensiblement plat et destiné à supporter la charge pendant son déplacement entre la position limite basse et la position limite haute ;
- deux dispositifs de déplacement, prévus de part et d'autre du support de charge, chacun d'un côté du véhicule de transport ; chaque dispositif de déplacement étant fixé pivotant à la partie avant du support de charge de sorte que le support de charge puisse pivoter par rapport aux dispositifs de déplacement autour d'un premier axe horizontal transversal à la direction générale du véhicule, les deux dispositifs de déplacement comportant chacun un actionneur ou un actionneur commun capable de provoquer le déplacement du support de charge à la fois vers le haut et vers l'avant du véhicule de transport pour le faire passer de la position limite basse à la position limite haute ;
- deux dispositifs d'inclinaison, distincts des dispositifs de déplacement, prévus de part et d'autre du support de charge, chacun d'un côté du véhicule de transport, chaque dispositif d'inclinaison étant fixé pivotant à la partie arrière du support de charge, de sorte que le support de charge puisse pivoter par rapport aux dispositifs d'inclinaison autour d'un second axe transversal à la direction générale du véhicule et parallèle au premier axe transversal, les deux dispositifs d'inclinaison comportant chacun un actionneur capable de provoquer le pivotement du support de charge autour du premier axe transversal de sorte à régler l'angle d'inclinaison du support de charge par rapport au plan général de chargement du véhicule de transport.

Cette invention permet avantageusement à l'opérateur de pouvoir évoluer sur le support de charge à une hauteur considérée comme sécuritaire, par exemple pour charger et décharger des véhicules sur le support de charge. Elle lui permet également, depuis le sol, de réaliser des opérations de manipulation d'une charge située sur un support de charge, par exemple en vue de placer, positionner et/ou arrimer ladite charge sur le support de charge, facilement et en toute sécurité, puis de déplacer ensuite cette charge en position surélevée vers l'avant, par exemple au-dessus de la cabine du véhicule de transport ou au-dessus d'une autre charge.

Alors que l'opérateur peut avantageusement être au niveau du sol, sans avoir besoin de monter en hauteur sur le véhicule de transport, les dispositifs de déplacement permettent avantageusement de déplacer la totalité de l'ensemble du support depuis une position limite basse jusqu'à une position limite haute en une seule étape de mouvement et avec un seul actionneur par dispositif de déplacement. Avantageusement, ils permettent également l'arrêt dans toutes les positions intermédiaires et permettent d'ajuster la position longitudinale du support de charge au-dessus de l'obstacle de sorte, notamment, que le support de charge puisse dépasser à l'avant du véhicule de transport.

Les dispositifs d'inclinaison permettent avantageusement de régler facilement, rapidement et avec précision l'inclinaison du support de charge, avec une grande amplitude de réglage, aussi bien dans un sens de basculement que dans l'autre.

L'ensemble de ces dispositifs sont avantageusement fiables, robustes, légers, peu coûteux et peu encombrants et sont adaptés à tout type de support de charge. Ils permettent un réglage précis de la position du support de charge, ces positions pouvant être verrouillées de manière continue, par exemple par l'utilisation de valves de sécurité sur les vérins ou par l'utilisation d'un réducteur irréversible ou d'un frein moteur. Ils présentent également une faible résistance au roulement, surtout avec le support de charge en position limite basse. Enfin, ils nécessitent peu d'actionneurs, qui n'ont pas besoin d'être intégrés au support de charge.

Selon un exemple de réalisation de l'invention, les deux dispositifs de déplacement déplacent le support de charge pour le faire passer de la position limite basse à la position limite haute, selon une trajectoire au moins partiellement courbe.

Cette trajectoire permet avantageusement d'effectuer la totalité du déplacement depuis une position limite basse située à l'arrière de l'obstacle jusqu'à une position limite haute située au-dessus de l'obstacle au moyen d'un seul actionneur par dispositif de déplacement.

Selon un autre exemple de réalisation de l'invention, chaque dispositif de déplacement comprend les moyens suivants :
- un montant vertical latéral situé à l'arrière de l'obstacle ;
- un bras pivotant dont une partie inférieure est fixée pivotante au montant et dont une partie supérieure est fixée pivotante au support de charge ;
- un vérin monté pivotant sur le montant et relié pivotant à un système de bielles relié au montant et au bras pivotant ;
ces moyens étant prévus de sorte que lorsque le vérin est actionné, le bras pivotant pivote par rapport au montant et déplace le support de charge vers le haut et vers l'avant selon une trajectoire courbe.

Selon un exemple supplémentaire de réalisation de l'invention, la partie inférieure et la partie supérieure du bras pivotant sont sensiblement rectilignes et reliées selon un angle obtus non plat, et, en position limite haute du support de charge, l'extrémité de la partie supérieure du bras pivotant opposée à l'angle s'étend vers l'avant.

Chaque bras pivotant présente ainsi une forme similaire à celle d'un boomerang classique ou en chevron, et cette forme permet avantageusement de déplacer le support de charge depuis sa position limite basse jusqu'à sa position limite haute, directement au-dessus de l'obstacle, selon une trajectoire courbe et permet d'épouser sensiblement la forme de l'obstacle pour ne pas entrer en collision avec celui-ci et ne pas engager l'arrière de la cabine du véhicule. Cette forme de chaque bras pivotant permet également, lorsqu'il est dans une position limite basse, de dégager l'accès au support de charge pour y manipuler la charge, par exemple en vue de son positionnement ou de son arrimage.

Selon un exemple de réalisation de l'invention, le système de bielles comprend une bielle supérieure et une bielle inférieure reliées pivotantes entre elles par une articulation, la bielle supérieure étant reliée pivotante au bras pivotant tandis que la bielle inférieure est reliée pivotante au montant, et en ce que le vérin est relié pivotant à ladite articulation.

Ce système de bielles, associé au bras pivotant, permet avantageusement de déplacer le support de charge selon une trajectoire courbe optimisée afin d'effectuer le déplacement souhaité tout en évitant sa collision avec l'obstacle. Ce système a également pour avantage de ne présenter aucune pièce au-dessus la cabine quand le support de charge est dans une position limite basse.

Selon un autre exemple de réalisation de l'invention, le dispositif de déplacement est prévu de sorte que la trajectoire courbe forme sensiblement un demi-cercle ou une demi-ellipse.

Selon un exemple de réalisation supplémentaire de l'invention, chaque dispositif de déplacement comprend les moyens suivants :
- un chemin de roulement, sensiblement en forme de L et présentant une première partie sensiblement rectiligne et sensiblement verticale s'étendant vers le bas à l'arrière de l'obstacle, ainsi qu'une seconde partie sensiblement rectiligne et sensiblement horizontale s'étendant vers l'avant au-dessus de l'obstacle ;
- un chariot mobile logé déplaçable dans le chemin de roulement et fixé de manière articulée au support de charge, dans la moitié avant de celui-ci ;
- un ensemble de motorisation prévu pour déplacer le chariot mobile le long du chemin de roulement.

En plus des avantages généraux de l'invention précédemment évoqués, ce mode de réalisation est notamment avantageux par la trajectoire simple et continue qui peut être suivie par le support de charge lors de son déplacement.

Cette forme du chemin de roulement permet notamment de déplacer le support de charge depuis sa position limite basse jusqu'à sa position limite haute, directement au-dessus de l'obstacle et sans risque de collision avec celle-ci.

Selon un autre exemple de réalisation de l'invention, l'extrémité inférieure de la première partie du chemin de roulement est située à une hauteur inférieure ou sensiblement égale à la hauteur du support de charge lorsque celui-ci est dans la position limite basse.

Ceci permet avantageusement au chariot mobile d'entraîner le support de charge depuis une position limite basse située, par exemple, à une hauteur inférieure à 2 mètres du sol.

Selon un exemple de réalisation de l'invention, l'extrémité avant de la seconde partie du chemin de roulement est située sensiblement au niveau du support de charge lorsque celui-ci est dans la position limite haute.

Ceci permet avantageusement au chariot mobile d'entraîner le support de charge jusqu'à une position limite haute située par exemple à une hauteur supérieure à 3 mètres du sol.

Selon un autre exemple de réalisation de l'invention, le chemin de roulement comprend un système de guidage comprenant deux rails ou glissières de guidage parallèles et parallèles au chemin de roulement.

C'est la forme et la disposition de ce système de guidage qui définit avantageusement la trajectoire du chariot mobile et donc du support de charge fixé à ce chariot.

Selon un exemple de réalisation supplémentaire de l'invention, la zone avant de chacun des montants des dispositifs de déplacement est reliée par une traverse conformée en déflecteur.

Cette traverse, en plus d'apporter rigidité et robustesse aux dispositifs de déplacement, améliore également l'aérodynamisme du véhicule de transport.

Selon un exemple de réalisation de l'invention, l'ensemble de motorisation comporte un mécanisme à lien souple, préférentiellement logé dans le montant, ledit mécanisme à lien souple comprenant :
- un lien souple fixé au chariot mobile et formant une boucle fermée dont au moins une partie est logée dans le chemin de roulement ;
- des roues ou pignons autour desquel(le)s le lien souple est engagé ;
- un système de motorisation apte à entraîner au moins un(e) roue ou pignon en rotation, de sorte d'entraîner le lien souple en déplacement autour desdit(e)s roues ou pignons.

Avantageusement, le lien souple est de préférence une chaîne, une courroie, un câble ou une combinaison de ceux-ci.

Selon un exemple de réalisation supplémentaire de l'invention, le lien souple est une chaîne et les roues ou pignons sont denté(e)s de sorte que la chaîne soit engrenée sur les dents desdit(e)s roues ou pignons.

Une telle chaîne engrenée sur des roues ou pignons denté(e)s procure un lien souple robuste et sensiblement non-étirable, qui permet d'indexer la position du chariot mobile de façon précise, sans risque de glissement du lien souple autour des roues ou pignons.

Selon un exemple de réalisation de l'invention, le mécanisme à lien souple comprend un système tendeur apte à mettre le lien souple en tension.

Un tel système est notamment avantageux dans le cas où le lien souple n'est pas une chaîne afin d'éviter le glissement du lien souple autour des roues ou pignons. Il est également avantageux dans le cas où l'on souhaite pouvoir faire varier la longueur globale du lien souple.

Selon un autre exemple de réalisation supplémentaire de l'invention, le véhicule de transport comporte un système de motorisation commun pour les deux mécanismes à lien souple, ledit système de motorisation comprenant un moteur hydraulique ou électrique associé à un réducteur comportant deux sorties d'arbres latérales, et une barre de transmission transversale reliée aux roues ou pignons motorisé(e)s.

L'usage d'un seul et même système de motorisation, en plus de réduire le coût, le poids et l'encombrement de l'ensemble est notamment avantageux en ce qu'il permet d'assurer le synchronisme des deux mécanismes à lien souple, de façon simple et fiable.

Selon un exemple de réalisation supplémentaire de l'invention, l'ensemble de motorisation comprend un mécanisme à crémaillère comprenant :
- au moins une roue dentée comportant des dents, qui est fixée au chariot mobile et entraînée à rotation par un moteur logé dans le chariot mobile ; et
- des moyens complémentaires aux dents de la roue dentés, par exemple des orifices, des dents ou une chaîne, qui sont prévus le long du chemin de roulement ;
les dents de la roue dentée étant prévues pour venir s'engager avec lesdits moyens complémentaires de sorte que le chariot mobile se déplace dans le chemin de roulement lorsque son moteur est actionné.

Selon un exemple de réalisation de l'invention, le chariot mobile comprend un dispositif antichute qui immobilise ledit chariot mobile en cas de défaillance de l'ensemble de motorisation.

Ce dispositif antichute permet notamment de sécuriser la position du support de charge en cas de panne.

Selon un autre exemple de réalisation de l'invention, le chariot mobile comprend un moyen de glissement, de roulement ou de guidage dans le chemin de roulement.

Ce moyen permet au chariot mobile de circuler sans risque de coincement ou d'à-coup le long du chemin de roulement.

Selon un exemple supplémentaire de réalisation de l'invention, le moyen de glissement, de roulement ou de guidage comprend des patins, des galets ou des roulettes.

Ce moyen est avantageux pour sa fiabilité, son caractère silencieux et son usure réduite.

Selon un exemple de réalisation de l'invention, la partie arrière du support de charge est équipée de patins, de roulettes ou de galets.

Ceci permet avantageusement au support de charge de rouler ou glisser par sa partie arrière sur la surface où il repose tandis qu'il est déplacé en traction par sa partie avant reliée aux deux dispositifs de déplacement.

Selon un autre exemple de réalisation de l'invention, l'actionneur de chaque dispositif d'inclinaison est un vérin dont une première extrémité inférieure est reliée pivotante, directement ou par l'intermédiaire d'une bielle, à une partie fixe du véhicule de transport, et dont la seconde extrémité supérieure est reliée pivotante au support de charge.

L'usage d'un vérin est notamment avantageux en ce qu'il est fiable, léger, peu encombrant et peu coûteux, et en ce que le déplacement de la tige du vérin peut être facilement piloté de sorte de régler facilement et avec précision l'inclinaison du support de charge. La tige du vérin peut avantageusement être bloquée en position ce qui permet notamment de donner de la rigidité au vérin afin de le faire fonctionner comme une bielle pour participer au levage du support de charge de façon passive lorsqu'il n'est pas actionné pour en régler l'inclinaison.

Selon un exemple de réalisation supplémentaire de l'invention, le vérin de chaque dispositif d'inclinaison est positionné de sorte d'effectuer un effort dont la composante verticale est majoritaire par rapport à sa composante horizontale lorsqu'il est actionné pour régler l'angle d'inclinaison longitudinal du support de charge par rapport au véhicule de transport.

Un tel vérin travaille avantageusement dans le sens de son alignement, avec des contraintes latérales faibles ou nulles, pour une meilleure fiabilité et durée de vie.

Selon un exemple de réalisation de l'invention l'extrémité supérieure du vérin de chaque dispositif d'inclinaison est reliée au support de charge dans la moitié arrière de celui-ci tandis que l'extrémité inférieure dudit vérin est reliée au véhicule de transport, à l'arrière de l'obstacle.

Selon un autre exemple de réalisation de l'invention, l'extrémité, inférieure du vérin est reliée au véhicule de transport à l'arrière des montants, tandis que la seconde extrémité supérieure du vérin est reliée pivotante au support de charge sensiblement au niveau du deuxième tiers du support de charge.

Ce positionnement du vérin permet avantageusement de pouvoir régler l'inclinaison du support de charge en faisant travailler le vérin en position sensiblement verticale, plus fiable et plus efficace, lorsque le support de charge est dans une position limite haute. La position arrière du vérin procure également de l'espace libre pour les dispositifs de déplacement.

Selon un exemple de réalisation supplémentaire de l'invention, l'obstacle est la cabine du véhicule de transport ou une zone de chargement susceptible de contenir une voiture.

Selon un exemple de réalisation de l'invention, la position limite haute est située à une hauteur supérieure à 3 mètres du sol.

L'invention présente de nombreux autres avantages. Parmi ceux-ci on peut notamment remarquer que, dans le cas d'un véhicule porte-voitures, l'ensemble de déplacement selon l'invention, par un positionnement adapté des actionneurs, permet de libérer les espaces situés devant les portes des voitures et les roues pour l'accès au sanglage lors du chargement. Il permet également le chargement d'une voiture au-dessus de la cabine et un véhicule haut sur le niveau inférieur et permet de positionner un support de charge vide au-dessus la cabine pour libérer tout l'espace situé derrière la cabine pour des chargements encombrants.

### Brève description des figures

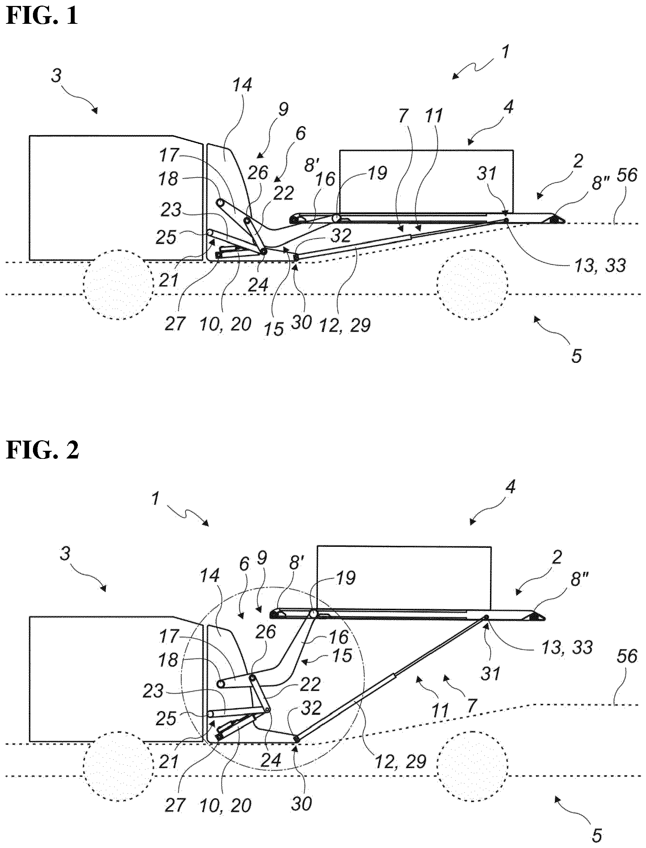

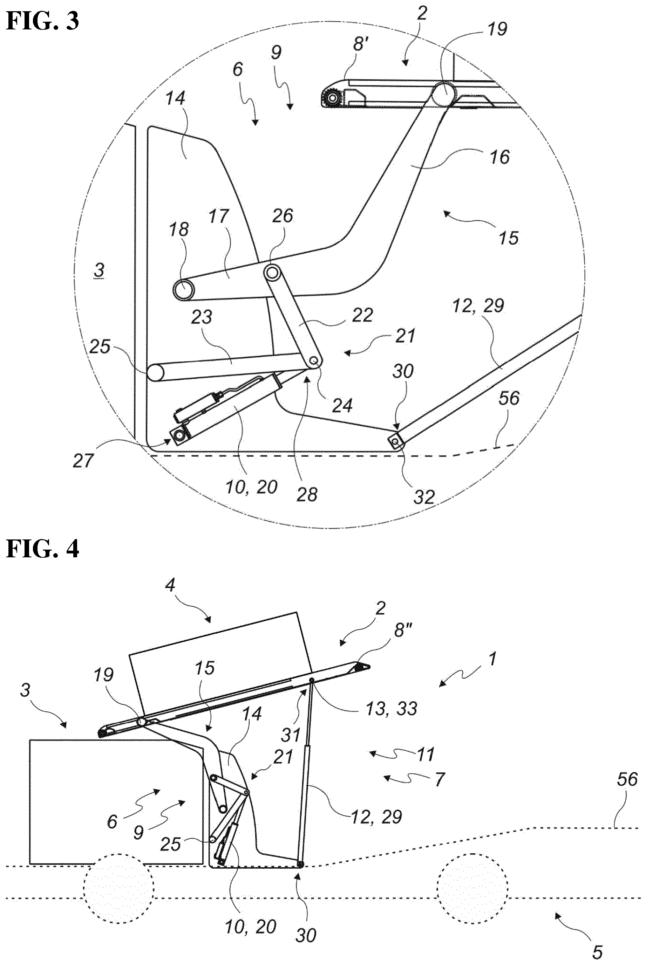

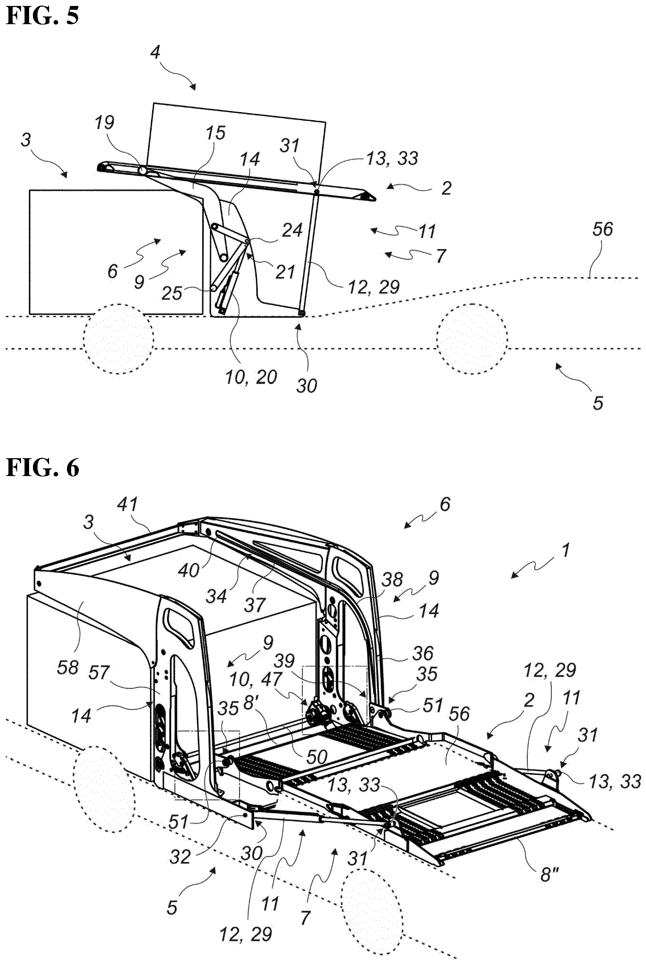

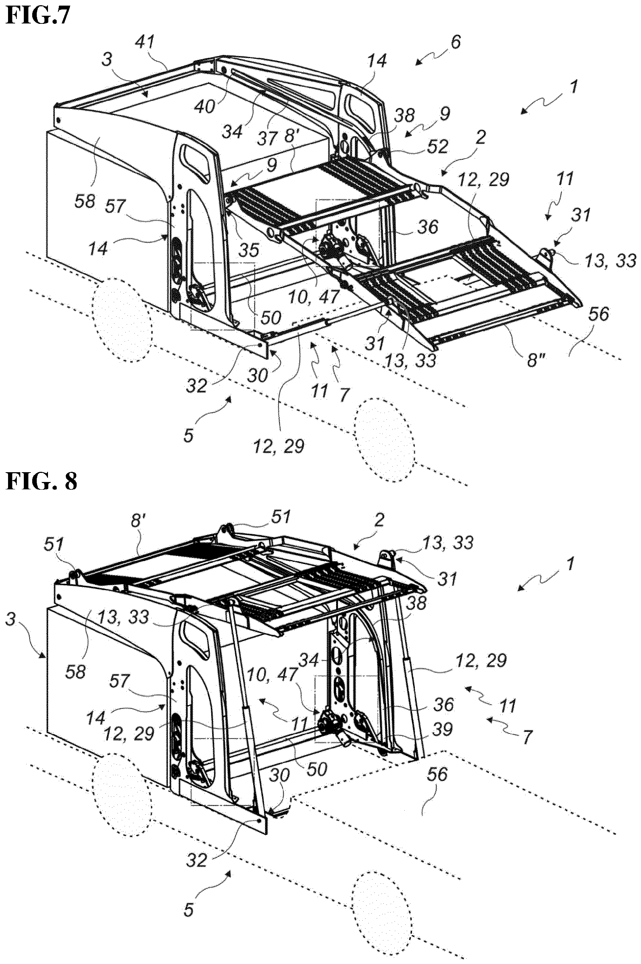

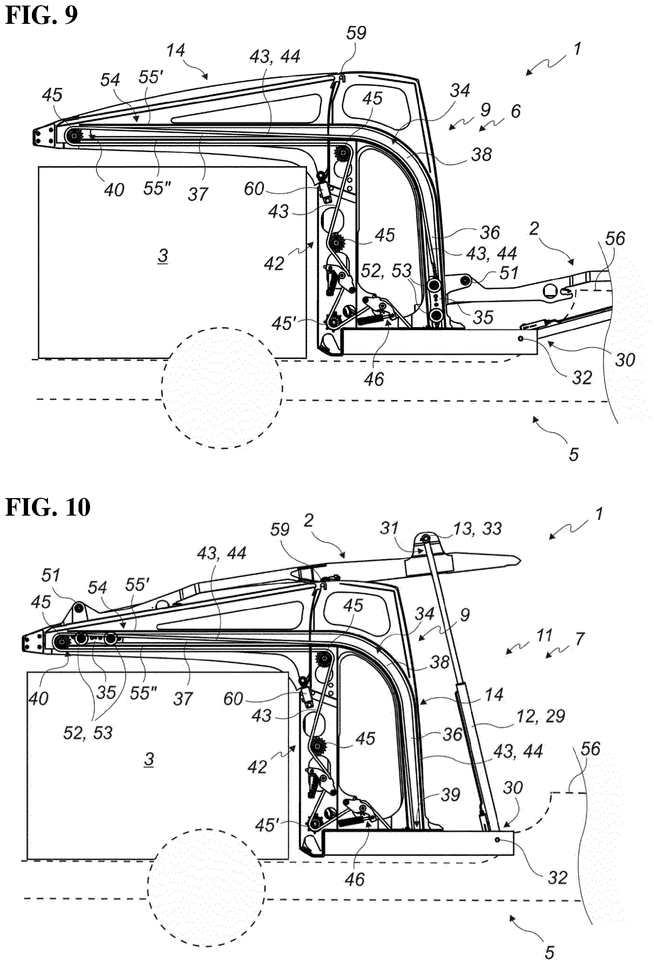

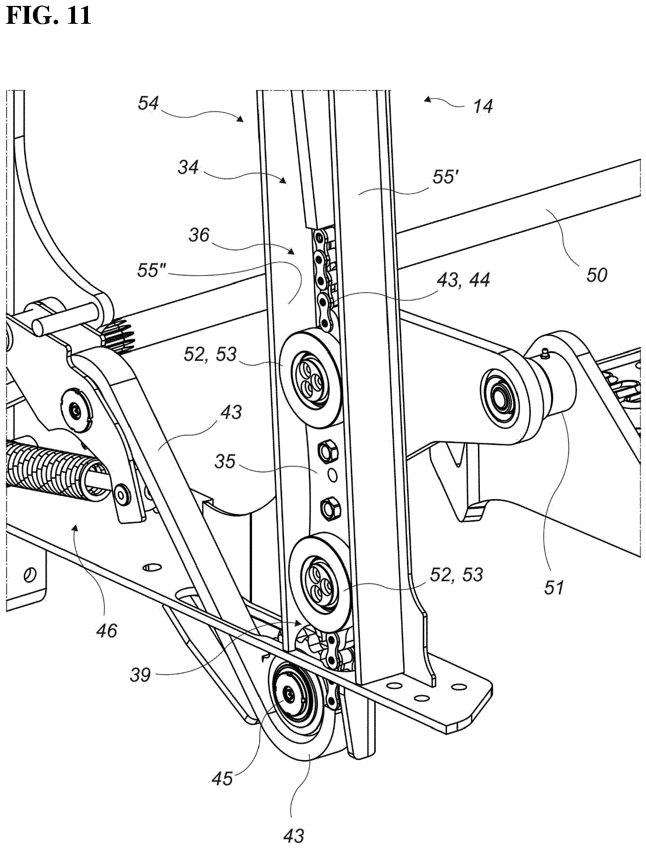

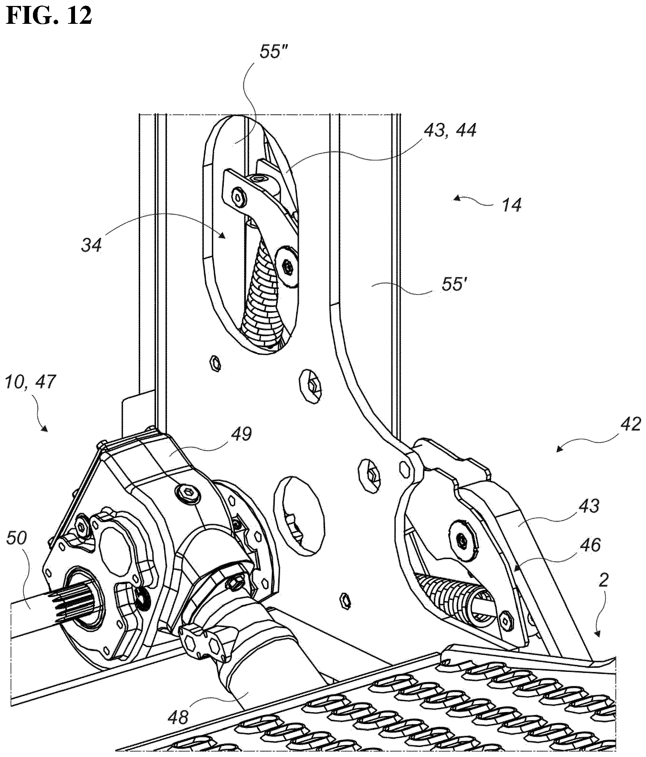

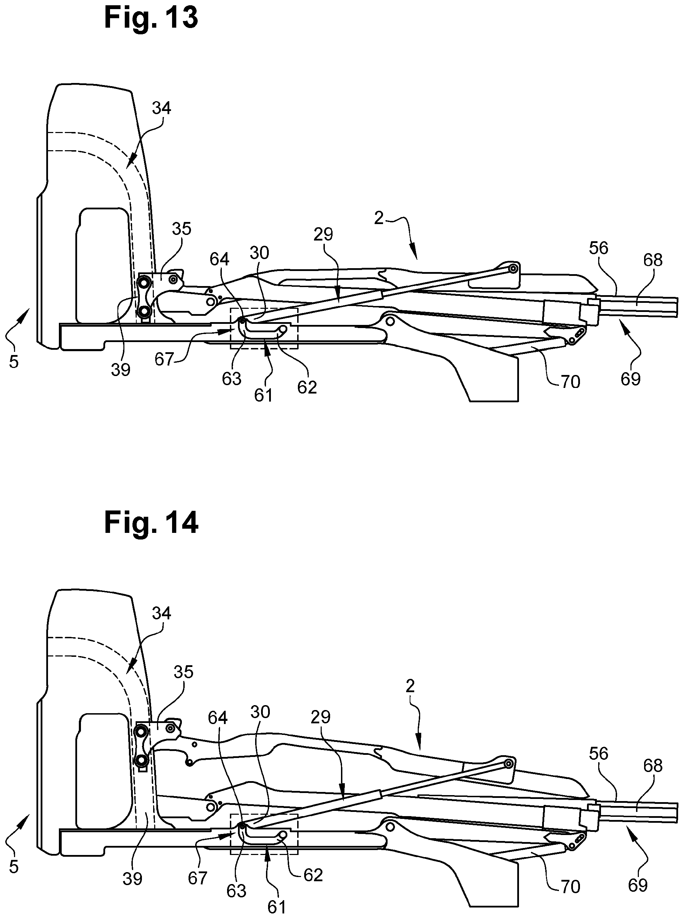

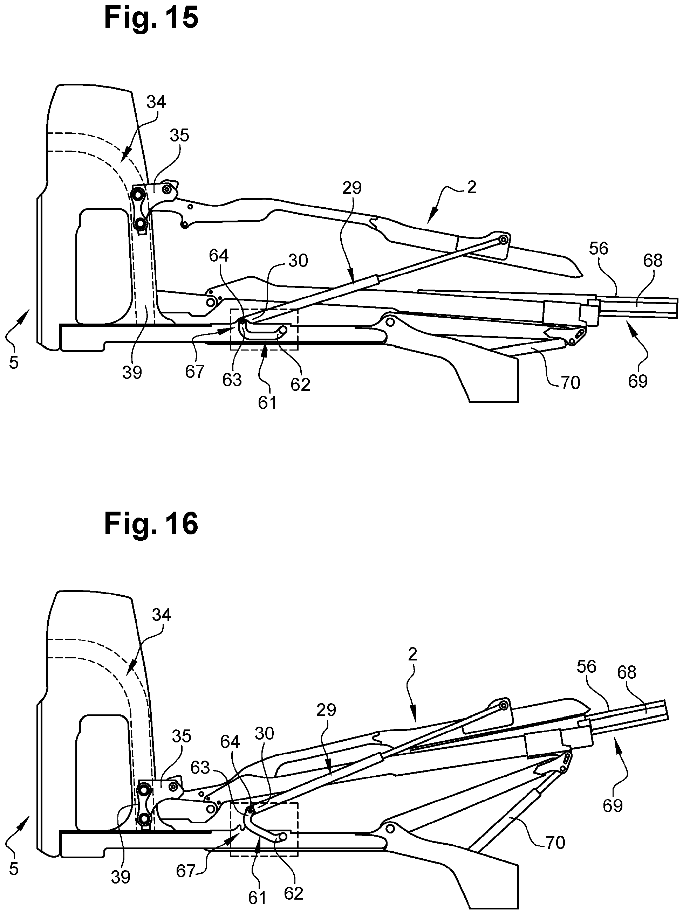

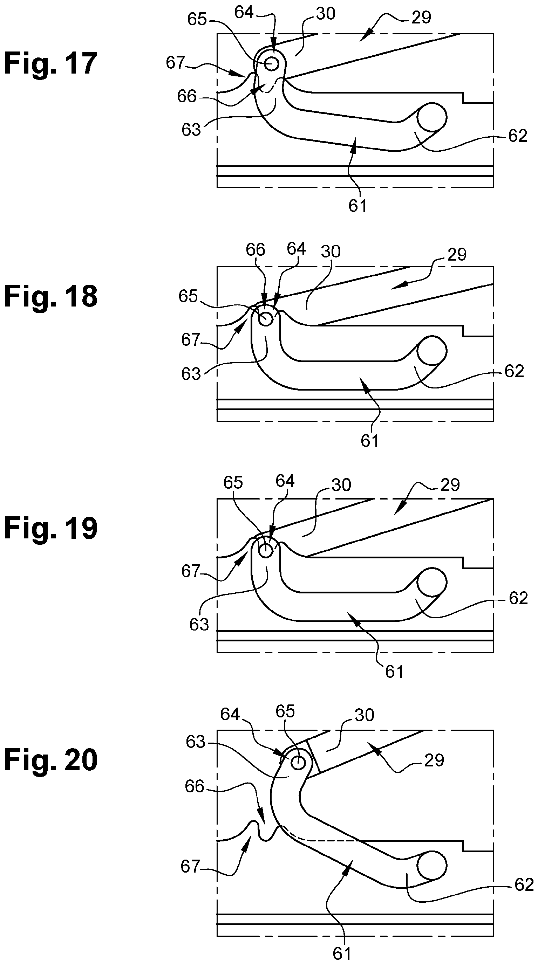

D'autres caractéristiques et avantages de la présente invention apparaîtront plus clairement à la lecture de la description qui va suivre, faite en référence aux dessins annexés, donnés à titre d'exemples non limitatifs, dans lesquels :
. la figure 1 est une vue de profil d'un véhicule de transport équipé d'un ensemble de déplacement d'une charge selon un premier mode de réalisation de l'invention, dans laquelle le support de charge est dans une position limite basse ;
. la figure 2 est une vue de profil similaire à celle de la figure 1, dans laquelle le support de charge est dans une position intermédiaire ;
. la figure 3 est une vue de détail de la zone encerclée sur la figure 2 ;
. la figure 4 est une vue de profil similaire à celle de la figure 1, dans laquelle le support de charge est dans une position limite haute avec l'arrière incliné vers le haut ;
. la figure 5 est une vue de profil similaire à celle de la figure 1, dans laquelle le support de charge est dans une position limite haute avec l'arrière incliné vers le bas, correspondant à une position de transport ;
. la figure 6 est une vue en perspective d'un véhicule de transport équipé d'un ensemble de déplacement d'une charge selon un second mode de réalisation de l'invention, dans laquelle le support de charge est dans une position limite basse ;
. la figure 7 est une vue en perspective similaire à celle de la figure 6, dans laquelle le support de charge est dans une position intermédiaire ;
. la figure 8 est une vue en perspective similaire à celle de la figure 6, dans laquelle le support de charge est dans une position limite haute ;
. la figure 9 est une vue de profil d'un véhicule de transport équipé d'un ensemble de déplacement d'une charge selon le second mode de réalisation de l'invention, dans laquelle le support de charge est dans une position limite basse ;
. la figure 10 est une vue de profil similaire à celle de la figure 9, dans laquelle le support de charge est dans une position limite haute ;
. la figure 11 est une vue de détail en perspective de la zone encadrée en bas à gauche sur la figure 6 dans laquelle une surface du montant n'est pas représentée afin de voir l'intérieur dudit montant ;
. la figure 12 est une vue de détail en perspective de la zone encadrée en haut à droite sur la figure 6 ;
. les figures 13, 14 et 15 sont des vues de profil d'une autre variante de l'ensemble selon l'invention dans laquelle l'extrémité inférieure du vérin du dispositif d'inclinaison est reliée au véhicule par l'intermédiaire d'une bielle, le support de charge étant respectivement :
   - dans une position limite basse sur la figure 13 ;
   - dans une position intermédiaire sur la figure 14 ; et
   - dans une position plus haute sur la figure 15 ;
. la figure 16 est une vue de profil similaire à celle de la figure 13, dans laquelle le plateau supérieur du véhicule, sur lequel repose l'extrémité arrière du support de charge, a été soulevé :
. les figures 17, 18, 19 et 20 sont des agrandissements des détails encadrés sur les figures 13, 14, 15 et 16 respectivement.

### Description détaillée de l'invention

Les éléments structurellement et fonctionnellement identiques présents sur plusieurs figures distinctes, sont affectés d'une même référence numérique ou alphanumérique.

Par axe ou direction longitudinal(e) on se référera à l'axe X ou à la direction générale longitudinale selon lequel ou laquelle se prolonge le véhicule de transport. Par axe Y ou direction transversale on se référera à un axe ou une direction horizontal(e) et orthogonal(e) à l'axe ou direction longitudinal(e). Par exemple, les essieux du véhicule de transport se prolongent selon un axe transversal. L'axe Z est l'axe vertical.

Par actionneur on entend tout dispositif qui transforme l'énergie qui lui est fournie en un phénomène physique qui fournit un travail mécanique, tel qu'un moteur ou un vérin.

Par actionneur commandé de sorte d'effectuer une action, on entend le fait de fournir de l'énergie à un actionneur et de lui transmettre une information de commande de sorte qu'il fournisse le travail mécanique pour lequel il est prévu, ce travail mécanique pouvant être prévu dans un sens, dans le sens inverse, ou les deux.

On notera que, de manière générale, l'invention concerne un ensemble de déplacement (1) d'un support de charge (2) depuis au moins une position limite basse située à l'arrière d'un obstacle (3) à une hauteur inférieure à 2 mètres du sol, vers l'avant jusqu'à au moins une position limite haute située au-dessus dudit obstacle (3), par exemple à une hauteur supérieure à 3 mètres du sol, ledit obstacle (3) étant une autre charge (4) ou une partie du véhicule de transport (5) équipé de l'ensemble de déplacement (1).

Une position limite basse correspond par exemple à une position de chargement et/ou de stockage pour le support de charge (2). C'est une hauteur suffisamment faible pour ne pas être considérée comme nécessitant des protections ou des habilitations règlementaires pour y travailler. A cette hauteur, l'opérateur peut avantageusement arrimer les charges (4) ou les manipuler tout en ayant les pieds au sol.

Une position limite haute correspond par exemple à une position chargée de transport pour le support de charge (2). C'est une hauteur suffisamment importante qui nécessite des protections ou des habilitations règlementaires pour toute personne devant y travailler. Dans le cas d'un véhicule porte-voitures, le sommet de la cabine est généralement à une hauteur proche ou supérieure à 3 mètres. A cette hauteur, l'opérateur ne peut pas atteindre les charges (4) depuis le sol, pour ce faire, il doit grimper sur le véhicule de transport (5) ou par exemple utiliser une échelle ou une nacelle, ce qui est peu pratique et dangereux.

Tout comme plusieurs positions limites basses peuvent être envisagées, il est évident qu'il peut également y avoir une multitude de positions limites hautes, notamment du fait qu'il est possible de positionner la charge en différentes positions et inclinaisons au-dessus de l'obstacle, et dans une position plus ou moins avancée par rapport à celui-ci.

On notera également que l'ensemble de déplacement (1) permet de positionner le support de charge (2) dans n'importe quelle position intermédiaire située entre la position limite basse et la position limite haute.

Dans un souci de simplification de la description, l'invention sera décrite et illustrée dans le cas préféré mais non limitatif où le véhicule de transport (5) est un véhicule porte-voiture, où la charge (4) arrimée sur le support de charge (2) est un véhicule et où l'obstacle (3) est un autre véhicule chargé sur le véhicule porte-voiture ou la cabine avant dudit véhicule porte-voiture.

Nous allons ainsi décrire deux exemples de réalisation d'un ensemble de déplacement (1) selon l'invention prévu par exemple pour déplacer un support de charge (2) depuis une position limite basse parmi plusieurs positions possibles et située à l'arrière de la cabine d'un véhicule porte-voitures jusqu'à une position limite haute parmi plusieurs positions possibles et située au-dessus de ladite cabine. De manière classique, chacun des exemples de réalisation décrits peut présenter de nombreuses variantes qui seront décrites et/ou qui seront évidentes pour l'homme du métier.

Il ne s'agit là que d'exemples de réalisation non limitatifs, car il est évident pour l'homme du métier que l'invention peut être aisément adaptée pour déplacer tout type de charge (4), préférentiellement lourde, par exemple du fret ou un véhicule, depuis une position limite basse située à l'arrière d'un obstacle (3) jusqu'à une position limite haute située au-dessus dudit obstacle (3), cet obstacle (3) pouvant être la cabine d'un véhicule, une autre partie dudit véhicule, une autre charge (4), ou tout autre obstacle (3) pouvant se trouver dans l'espace de chargement.

L'ensemble de déplacement (1) selon l'invention est prévu pour équiper un véhicule de transport (5) de charges (4). Il comporte un support de charge (2), un système de déplacement (6) du support de charge (2) depuis une position limite basse jusqu'à une position limite haute et un système d'inclinaison (7) du support de charge (2), distinct du système de déplacement (6).

Le système de déplacement (6) est prévu pour déplacer le support de charge (2) vers le haut et vers l'avant lors d'une phase de déplacement, tandis que le système d'inclinaison (7) est prévu pour orienter l'angle de basculement longitudinal du support de charge (2) lors d'une phase d'inclinaison, la phase d'inclinaison ayant lieu préférentiellement après la phase de déplacement.

Le support de charge (2) est destiné à supporter la charge (4) pendant son déplacement depuis une position limite basse jusqu'à une position limite haute. Il est sensiblement plat et comporte un dispositif d'arrimage pour arrimer la charge (4) sur le support de charge (2). Notamment lorsque la charge (4) est un véhicule, le dispositif d'arrimage peut comporter des sangles, des cales, des orifices pour roue, des perforations pour fixer des cales, des treuils, des chariots de sanglage et tous autres moyens permettant d'arrimer un véhicule sur un support de charge (2).

Le support de charge (2) est préférentiellement centré latéralement par rapport au véhicule de transport (5) de charges (4) et se prolonge selon l'axe longitudinal de ce dernier. Il est habituellement utilisé sensiblement horizontal, mais une fois qu'une ou plusieurs charges (4) sont arrimées sur celui-ci, il peut être positionné légèrement incliné, notamment au-dessus de la cabine du véhicule de transport (5) de charge.

Le support de charge (2) comporte préférentiellement deux traverses d'extrémité (8', 8") et destinées chacune à supporter les deux roues d'un essieu d'un véhicule chargé sur ledit support de charge (2).

Le système de déplacement (6) du support de charge (2) comporte deux dispositifs de déplacement (9) prévus latéralement de manière symétrique de chaque côté du véhicule de transport (5), de part et d'autre du support de charge (2). Chaque dispositif de déplacement (9) est fixé pivotant au support de charge (2), dans la moitié avant de celui-ci, de sorte que le support de charge (2) puisse pivoter par rapport aux dispositifs de déplacement (9) autour d'un premier axe transversal.

Chacun des deux dispositifs de déplacement (9) comporte au moins un actionneur (10) qui, lorsqu'il est commandé, déplace l'ensemble du support de charge (2) à la fois vers le haut et vers l'avant du véhicule de transport (5), depuis une position limite basse jusqu'à une position limite haute. Ce déplacement de l'ensemble du support de charge (2) est réalisé selon une trajectoire au moins partiellement courbe.

Les dispositifs de déplacement (9) effectuent le levage et le déplacement vers l'avant du support de charge (2) par la partie avant de celui-ci - en le soulevant depuis un point situé dans la moitié avant du support de charge (2) - et ne participent pas activement à l'inclinaison du support de charge (2). Pendant la phase d'inclinaison, lorsque les dispositifs de déplacement (9) ne déplacent pas le support de charge (2), lesdits dispositifs de déplacement (9) sont préférentiellement bloqués en position.

Le système d'inclinaison (7) du support de charge (2) comporte deux dispositifs d'inclinaison (11), distincts des dispositifs de déplacement (9). Ils sont préférentiellement prévus en miroir de chaque côté du véhicule de transport (5) et de part et d'autre du support de charge (2). Chaque dispositif d'inclinaison (11) est fixé pivotant au support de charge (2), dans la moitié arrière de celui-ci, de sorte que le support de charge (2) puisse pivoter par rapport aux dispositifs de déplacement (9) autour d'un second axe transversal.

Chacun des deux dispositifs d'inclinaison (11) comporte au moins un actionneur (12), distinct de l'actionneur du système de déplacement (6), et apte à faire pivoter le support de charge (2) autour du premier axe horizontal lorsqu'il est commandé de sorte de régler l'angle d'inclinaison longitudinal du support de charge (2) par rapport au véhicule de transport (5), c'est-à-dire l'inclinaison du support de charge (2) autour d'un axe transversal.

Les dispositifs d'inclinaison (11) réalisent l'inclinaison longitudinale du support de charge (2), en agissant au niveau de l'arrière de celui-ci - en déplaçant verticalement l'arrière du support de charge (2) depuis un point de fixation (13) situé dans la moitié arrière du support de charge (2) - et ne participent pas activement ni au levage, ni au déplacement vers l'avant du support de charge (2). Pendant la phase de déplacement, les dispositifs d'inclinaison (11) ne sont cependant pas nécessairement inutiles, ils peuvent par exemple être alimentés en énergie de sorte de supporter une partie du poids du support de charge (2) pendant son déplacement par les dispositifs de déplacement (9).

On notera que l'invention se distingue notamment de l'art antérieur connu en ce que le déplacement du support de charge (2) depuis une parmi l'au moins une position limite basse jusqu' à une parmi l'au moins une position limite haute est effectué en une seule étape au lieu d'être décomposé en un premier déplacement vertical et en un second déplacement horizontal. Lors de ce déplacement, c'est tout l'ensemble du support de charge (2) qui est déplacé depuis une parmi l'au moins une position limite basse jusqu'à l'au moins une position limite haute, et non pas seulement une partie de celui-ci. Enfin, la trajectoire effectuée par l'ensemble du support de charge (2) lors de ce déplacement est au moins partiellement courbe, au lieu d'être composée de deux trajectoires rectilignes formant un angle droit non arrondi.

Selon un premier mode de réalisation de l'invention représenté sur les figures 1 à 5, le véhicule de transport (5) de charges (4) comporte deux montants (14) verticaux et latéraux, en regard l'un de l'autre de chaque côté dudit véhicule de transport (5). Ces montants (14) sont situés à l'arrière de l'obstacle (3), préférentiellement à proximité immédiate de celui-ci. Ainsi, dans le cas d'un véhicule porte-voitures, les montants (14) sont situés juste derrière la cabine, sensiblement dans le même plan que les portières de ladite cabine. Dans ce cas, les montants (14) présentent sensiblement la même hauteur que la cabine ou sont légèrement moins hauts que celle-ci.

Selon ce premier mode de réalisation de l'invention, chaque dispositif de déplacement (9) de l'invention comprend un bras pivotant (15), préférentiellement prévu avec deux parties sensiblement rectilignes (16, 17) reliées entre elle selon un angle non plat, avec un angle de préférence arrondi. Ainsi chaque bras pivotant (15) peut adopter un profil général en forme de boomerang classique ou de chevron. La partie sensiblement rectiligne (16) du bras pivotant (15) qui est destinée à être pivotée au-dessus de l'obstacle (3) lors de la phase de déplacement du support de charge (2) est désignée en tant que partie supérieure (16), tandis que l'autre partie sensiblement rectiligne (17) du bras pivotant (15) est désignée en tant que partie inférieure (17).

La partie inférieure (17) et la partie supérieure (16) du bras pivotant (15) sont reliées selon un angle compris entre 90 et 180 degrés, préférentiellement compris entre 90 et 150 degrés.

Les deux bras pivotants (15) du système de déplacement (6) sont préférentiellement agencés en parallélogramme ou quasi-parallélogramme et portent le support de charge (2). Ils peuvent être reliés par un tube de torsion pour améliorer la stabilité et le parallélisme des bras pivotants (15) lors des manoeuvres.

La partie inférieure (17) du bras pivotant (15) de chaque dispositif de déplacement (9) est fixée pivotante par une première extrémité (18) à un montant (14) du véhicule de transport (5), de préférence sensiblement à mi-hauteur de ce dernier.

La partie supérieure (16) du bras pivotant (15) de chaque dispositif de déplacement (9) est fixée pivotant par une seconde extrémité (19) au support de charge (2), dans la moitié avant de ce dernier, de préférence sensiblement au niveau du premier tiers du support de charge (2). Le bras pivotant (15) de chaque dispositif de déplacement (9) est préférentiellement fixé aux flancs latéraux du support de charge (2).

Chaque dispositif de déplacement (9) de l'invention comprend également un vérin (20) et un système de bielles (21) reliés au bras pivotant (15) pour le faire pivoter par rapport au montant (14) lorsque le vérin (20) est actionné, de sorte que sa seconde extrémité (19) fixée au support de charge (2) décrive une trajectoire courbe vers le haut et vers l'avant, cette trajectoire formant sensiblement un demi-cercle ou une demi-ellipse.

Le système de bielles (21) comprend préférentiellement deux bielles (22, 23) reliées pivotantes entre elles par une articulation (24). La bielle (22) reliée à la partie inférieure du bras pivotant (15) est désignée en tant que bielle supérieure (22), tandis que la bielle (23) reliée au montant (14) est désignée en tant que bielle inférieure (23).

Une première extrémité (25) de la bielle inférieure (23) est montée pivotante sur le montant (14), tandis que sa seconde extrémité est reliée pivotante à la bielle supérieure (22) par l'articulation (24).

Une première extrémité (26) de la bielle supérieure (22) est montée pivotante sur la partie inférieure (17) du bras pivotant (15), tandis que sa seconde extrémité (26) est reliée pivotante à la bielle inférieure (23) par l'articulation (24).

Une première extrémité (27) du vérin (20) de chaque dispositif de déplacement (9) de l'invention est montée pivotante sur une partie fixe du véhicule de transport (5) située sous le bras pivotant (15), par exemple en partie inférieure d'un montant (14) de celui-ci, tandis que sa seconde extrémité (28) est reliée pivotante à l'articulation (24) du système de bielles (21).

Lorsque le support de charge (2) est dans une position limite basse (cf. figure 1), la partie inférieure (17) de chaque bras pivotant (15) est inclinée vers le bas et vers l'arrière, tandis que la partie supérieure (16) de chaque bras pivotant (15) est basculée vers l'arrière, pratiquement à l'horizontale.

Lorsque le support de charge (2) est dans une position limite haute (cf. figures 4 et 5), la partie inférieure (17) de chaque bras pivotant (15) se prolonge vers le haut, pratiquement à la verticale, tandis que la partie supérieure (16) de chaque bras pivotant (15) est dans une position limite haute et s'étend vers l'avant, pratiquement à l'horizontale. Dans cette position limite haute, on notera que la forme en boomerang ou en chevron de chaque bras pivotant (15), en plus de permettre de déplacer le support de charge (2) depuis une position limite basse jusqu'à une position limite haute selon une trajectoire courbe, permet également et avantageusement d'épouser sensiblement la forme de l'obstacle (3) pour ne pas entrer en collision avec celui-ci. La partie avant de la partie supérieure (17) de chaque bras pivotant (15) se prolonge loin vers l'avant, ce qui permet avantageusement de déporter le support de charge (2) vers l'avant autant que cela est souhaité. Dans le cas d'un véhicule porte-voitures, cette forme libère également l'espace devant le support de charge pour permettre de charger les roues de la voiture contre la traverse d'extrémité (8'). On notera en outre que les cinématiques permettent de positionner le support de charge (2) suffisamment loin derrière la cabine pour charger des voitures avec un grand porte-à-faux avant.

Bien entendu, le positionnement et la forme des différents moyens constitutifs et liaisons du système de déplacement (6) de l'invention ne sont donnés ici qu'à titre d'exemple. Il est évident pour l'homme du métier d'utiliser des moyens similaires agencés différemment pour aboutir au même déplacement du support de charge (2).

Ainsi, dans le cas où l'obstacle (3) présente une forme qui diffère d'un parallélépipède, la forme des bras pivotants (15) peut être adaptée en conséquence.

Selon ce premier mode de réalisation de l'invention, chaque dispositif d'inclinaison (11) comprend préférentiellement un vérin (29) dont une première extrémité (30), inférieure, est reliée pivotante à une partie fixe du véhicule de transport (5), située par exemple à l'arrière des montants (14), tandis que la seconde extrémité (31), supérieure, est reliée pivotante au support de charge (2), de préférence au niveau d'un flanc latéral de celui-ci, sensiblement au niveau du deuxième tiers du support de charge (2).

En position limite basse du support de charge (2) (cf. figure 1), le vérin (29) est peu incliné, avec un angle d'inclinaison de l'ordre d'une dizaine de degrés par rapport à l'horizontale. En effet, la cinématique est étudiée pour que lors du début de trajectoire, où le vérin (29) est couché, ce vérin (29) ne porte aucune charge, le support de charge (2) est en appui en avant au niveau de la seconde extrémité (19) et à l'arrière contre la traverse d'extrémité (8") qui roule ou frotte sur la surface (56) sur laquelle le support de charge (2) repose. A partir d'un moment où l'inclinaison du dispositif d'inclinaison (11) est acceptable, la traverse d'extrémité (8") quitte la surface (56) sur laquelle le support de charge (2) était en appui et le support de charge est porté par la seconde extrémité (19) et le point de fixation (13).

Lors du déplacement du support de charge (2) vers une position limite haute, le vérin (29) pivote autour de son point de fixation bas (32) au véhicule de transport (5) et son point de fixation haut (33) au support de charge (2) est déplacé vers l'avant, de sorte que le vérin (29) se redresse (cf. figure 2) pour se rapprocher d'une position verticale. Lorsque le support de charge (2) est dans une position limite haute plus ou moins avancée au-dessus de l'obstacle (3) (cf. figures 4 et 5), le vérin (29) est sensiblement vertical, et son travail en extension et/ou en rétraction permet de régler l'inclinaison du support de charge (2) en le faisant basculer autour du point de fixation pivotant (19) du support de charge (2) au bras pivotant (15). Le système d'inclinaison (7) peut alors incliner le support de charge (2) au niveau de l'arrière, soit vers le haut, soit vers le bas, de sorte que le support de charge (2) puisse être positionné avec l'angle d'inclinaison souhaité pour le transport, par exemple avec l'arrière basculé vers le haut (cf. figure 4) ou vers le bas (cf. figure 5).

On notera que les points de fixation bas et haut (32, 33) du vérin (29), respectivement au véhicule de transport (5) et au support de charge (2), sont prévus de sorte que, lorsque le support de charge (2) est dans une position limite haute au-dessus de l'obstacle (3), le vérin (29) soit dans une position la plus verticale et orthogonale au sol possible, ce qui lui permet avantageusement de reprendre avec un maximum d'efficacité le poids du véhicule, pour une meilleure fiabilité et durée de vie du vérin. Dans le cas d'un véhicule porte-voitures, la position du vérin (29) est aussi choisie pour dégager l'espace afin de pouvoir charger une autre voiture en bas sans gêner les ouvertures de porte et accès à l'arrimage.

On notera qu'un système d'inclinaison (7) dont les dispositifs d'inclinaison (11) comprennent chacun un vérin (29) est préféré, par sa simplicité, sa robustesse, son faible encombrement et son faible coût. Ce vérin est préférentiellement équipé d'un bloc de sécurité à clapet ce qui permet de régler et de verrouiller la position de la tige mobile du vérin (29) de manière continue.

D'autres moyens peuvent également être utilisés pour régler l'inclinaison du support de charge (2) en le faisant basculer vers le haut ou vers le bas au niveau de l'arrière de celui-ci. L'homme du métier peut par exemple adapter un dispositif à bielles, à vis, à chaîne, à courroie, à câble ou autre, mais de tels moyens nécessitent généralement la présence d'une autre paire de montants sur le véhicule pour le système d'inclinaison (7), et ne présentent pas tous les avantages des dispositifs d'inclinaison (11) à vérin.

Selon un second mode de réalisation de l'invention représenté sur les figures 6 à 12, le véhicule de transport (5) de charges (4) comporte deux montants (14) verticaux et latéraux, en regard l'un de l'autre de chaque côté dudit véhicule. Ces montants (14) sont situés à l'arrière de l'obstacle (3), préférentiellement à proximité immédiate de celui-ci. Ainsi, dans le cas d'un véhicule porte-voitures, les montants (14) sont situés juste derrière la cabine, sensiblement dans le même plan que les portières de ladite cabine. Dans ce cas, les montants (14) se prolongent sensiblement plus hauts que la cabine.

Chacun des deux montants (14) comporte un chemin de roulement (34) prévu pour un chariot mobile (35). Ce chemin de roulement (34) est sensiblement en forme de L, avec un angle de préférence arrondi, c'est-à-dire avec deux parties (36, 37) sensiblement rectilignes reliées de façon sensiblement perpendiculaire par une partie préférentiellement courbe (38).

La première partie (36) sensiblement rectiligne du chemin de roulement (34) est sensiblement verticale et située à l'arrière de l'obstacle (3), tandis que la seconde partie sensiblement rectiligne (37) du chemin de roulement (34) est sensiblement horizontale, au-dessus de l'obstacle (3), et prolonge vers l'avant la partie supérieure de la première partie (36) sensiblement rectiligne du chemin de roulement (34). La forme générale en L des chemins de roulement (34) est étudiée pour faire passer le support de charge (2) depuis une position limite basse à l'arrière de l'obstacle (3) à une position limite haute au-dessus de l'obstacle selon une trajectoire en forme de croissant ou d'arc de cercle.

L'extrémité inférieure (39) de la première partie (36) sensiblement rectiligne du chemin de roulement (34) est située sensiblement au niveau du support de charge (2) lorsque celui-ci est dans une position limite basse, ou plus basse que celui-ci. Ainsi, cette extrémité est située à une hauteur inférieure à 2 mètres du sol.

L'extrémité avant (40) de la seconde partie sensiblement rectiligne (37) du chemin de roulement (34) est située sensiblement au niveau du support de charge (2) lorsque celui-ci est dans une position limite haute. Ainsi, cette extrémité peut être située à une hauteur supérieure ou égale à 3 mètres du sol, ou à une hauteur légèrement inférieure. L'extrémité avant (40) se trouve au-dessus de l'obstacle (3) de manière à ne pas avoir de collision entre le support de charge (2) et l'obstacle (3) lors du coulissement longitudinal. Dans cette zone, on peut s'arrêter où on veut et c'est un grand avantage.

La zone avant de chacun des deux montants (14) peut avantageusement être conformée en déflecteur pour améliorer la résistance aérodynamique du système de déplacement (6).

En outre, la zone avant de chacun des deux montants (14) peut avantageusement être reliée par une traverse (41) qui procure de la rigidité à l'ensemble formé par les deux montants (14). Cette traverse (41) peut également être conformé en déflecteur pour améliorer la résistance aérodynamique du système de déplacement (6).

Les deux montants (14) peuvent adopter sensiblement la même forme générale en L des chemins de roulement (34). Ils comprennent alors chacun une partie sensiblement rectiligne verticale (57) et une partie sensiblement rectiligne horizontale (58) qui s'étend vers l'avant.

La partie sensiblement horizontale (58) est préférentiellement montée articulée à la partie sensiblement verticale (57), par exemple au niveau d'une articulation de pivotement (59). Un actionneur, par exemple sous la forme d'un vérin (60), peut être prévu au niveau de chacun des montants (14) pour provoquer le basculement vers le haut de la partie sensiblement horizontale (58) des montants (14) par rapport la partie sensiblement verticale (57). Ainsi, après basculement de la partie sensiblement horizontale (58) des montants (14), il est par exemple possible de basculer la cabine pour la maintenance et d'adapter sa hauteur en fonction des cabines.

Comme cela est visible sur les figures, de manière préférée les montants (14) de la variante avec chemins de roulement (34) ne s'arrêtent par directement au-dessus desdits chemins de roulement (34), mais se prolongent un peu plus loin vers l'avant et aussi et surtout vers le haut.

En effet, en plus d'abriter les chemins de roulement (34), la partie supérieure des montants (14) sert aussi notamment à maintenir latéralement le support de charge (2). Ainsi le support de charge (2) situé entre la partie supérieure des deux montants (14) est sensiblement calé latéralement de sorte de rester en position en roulage.

Cet étirement vers le haut de la partie supérieure des montants (14) permet également de déporter au plus haut l'articulation de pivotement (59) de chacun des montants (14), ce qui permet avantageusement de limiter l'effort que doit fournir le vérin (60) pour soulever la partie sensiblement horizontale (58) des montants (14).

Selon ce second mode de réalisation de l'invention, chaque dispositif de déplacement (9) de l'invention comprend un mécanisme à lien souple (42), préférentiellement logé dans un montant (14) du véhicule de transport (5).

Chaque mécanisme à lien souple (42) comporte un lien souple (43) formant une boucle fermée par exemple une chaîne, une courroie, un câble, un autre lien souple (43) ou une combinaison de ceux-ci, dont au moins une partie (44) est logée dans le chemin de roulement (34).

Le mécanisme à lien souple (42) est de préférence un mécanisme à chaîne, tel que cela est illustré à titre d'exemple sur les figures 6 à 12.

On notera que pour alléger les figures, le lien souple (43) n'est pas représenté sous la forme d'une chaîne sur toute sa longueur.

Le mécanisme à lien souple (42) comprend des roues ou pignons (45) autour desquel(le)s le lien souple (43) est en contact de sorte de lui faire adopter une trajectoire définie.

Dans le cas où le lien souple (43) est une chaîne, ces roues ou pignons (45) sont denté(e)s de sorte que la chaîne soit engrenée sur les dents desdit(e)s roues ou pignons (45). Dans le cas où le lien souple (43) est une courroie ou un câble, il est préférentiellement en tension sur lesdit(e)s roues ou pignons (45). Selon un mode de réalisation préféré de l'invention, chaque lien souple (43) est mis en tension au moyen d'au moins un système tendeur (46) comprenant par exemple un ressort, un actionneur pneumatique ou un actionneur hydraulique.

Au moins un(e) roue ou pignon (45') est motorisé(e) en rotation, de sorte d'entraîner le lien souple (43) en déplacement autour desdit(e)s roues ou pignons (45) lorsque la roue ou le pignon motorisé(e) (45') est entraîné(e) en rotation. Selon un mode de réalisation préféré de l'invention, un même système de motorisation (47), commun aux deux mécanismes à lien souple (42), entraîne au moins un(e) roue ou pignon (45') en rotation dans chacun des deux mécanismes à lien souple (42) de sorte que les liens souples (43) soient entraînés de façon symétrique et synchrone.

Le système de motorisation (47) comprend préférentiellement un moteur (48) hydraulique ou électrique, par exemple associé à un réducteur (49) de préférence irréversible, comportant deux sorties d'arbres latérales. Une barre de transmission (50) transversale relie préférentiellement les roues ou pignons (45) motorisé(e)s au système de motorisation (47). Si le réducteur (49) est réversible, on prévoit préférentiellement un frein automatique de sécurité au niveau du moteur (48).

Selon ce second mode de réalisation de l'invention, un chariot mobile (35) est logé dans chaque chemin de roulement (34) et fixé au lien souple (43) qui s'y trouve et fixé de manière articulée au support de charge (2), dans la moitié avant de celui-ci. Ainsi, lorsque le lien souple (43) est entraîné en déplacement autour des roues ou pignons (45), il entraîne avec lui le chariot mobile (35) le long du chemin de roulement (34), qui déplace à son tour le support de charge (2) le long du chemin de roulement (34) au niveau du point de fixation pivotant (51) prévu entre le chariot mobile (35) et le support de charge (2).

Dans cette variante de l'invention, dans le cas d'un véhicule porte-voitures, la position du chemin de roulement (34), la forme du chariot mobile (35) et la position du point de fixation pivotant (51) permettent l'accès des voitures avec un grand porte-à-faux et permettent l'accès au sanglage.

Afin de faciliter le déplacement du chariot mobile (35) au sein du chemin de roulement (34), chaque chariot mobile (35) comprend préférentiellement un moyen de glissement, de roulement ou de guidage (52), par exemple des patins, des galets ou des roulettes (53).

Le déplacement du chariot mobile (35) au sein du chemin de roulement (34) est préférentiellement guidé en déplacement par un système de guidage (54), par exemple des rails ou des glissières de guidage (55', 55"). Selon un mode de réalisation préféré représenté sur les figures, le système de guidage (54) de chaque chemin de roulement (34) comprend deux glissières de guidage (55', 55") parallèles entre elles et au chemin de roulement (34). Ainsi, chacune des glissières de guidage (55', 55") adopte une forme générale en L avec un angle de préférence arrondi. Cet angle de préférence arrondi permet notamment au chariot mobile (35) de suivre une trajectoire en forme de L sans risque de se coincer lors de son déplacement le long du chemin de roulement (34).

Lorsque le lien souple (43) est entraîné par le système de motorisation (47), le chariot mobile (35) tracte l'avant du support de charge (2), et déplace l'avant du support de charge (2) le long du chemin de roulement (34).

Pendant la première phase de ce déplacement où chaque chariot mobile (35) se déplace dans la partie sensiblement verticale des chemins de roulement (34), la partie arrière du support de charge (2) peut glisser ou rouler sur la surface (56) sur laquelle le support de charge (2) repose. Dans ce but, la partie arrière du support de charge (2) peut être équipée de patins, de roulettes ou de galets.

Pendant la seconde phase de ce déplacement où chaque chariot mobile (35) se déplace vers l'avant dans la seconde partie sensiblement rectiligne (37) du chemin de roulement (34) horizontale des chemins de roulement (34), la partie arrière du support de charge (2) peut être soulevée ou abaissée par un dispositif d'inclinaison (11).

Ce dispositif peut avantageusement être similaire au dispositif d'inclinaison (11) à vérin du premier mode de réalisation de l'invention décrit précédemment.

Ainsi, pendant la première phase de déplacement de chaque chariot mobile (35), la tige mobile du vérin (29) de chaque dispositif d'inclinaison (11) peut être bloquée en position sortie, de préférence à sa course maximum. Ces vérins (29) se comportent alors chacun comme une bielle de longueur fixe et ne jouent aucun rôle actif pendant la première phase de déplacement des chariots mobiles (35).

Lors de la seconde phase de déplacement des chariots mobiles (35), l'inclinaison du support de charge (2) peut être modifiée par les dispositifs d'inclinaison (11) quelle que soit la position d'arrêt des chariots mobiles (35) le long de la seconde partie sensiblement rectiligne et horizontale (37) des chemins de roulement (34).

Lors de la seconde phase de déplacement des chariots mobiles (35), ces derniers sont déplacés vers l'avant jusqu' à ce que le support de charge (2) soit positionné au-dessus de l'obstacle (3) selon la position longitudinale souhaitée. Le déplacement vers l'avant ou vers l'arrière des chariots mobiles (35) permet d'ajuster cette position longitudinale du support de charge (2).

Lorsque le support de charge (2) est positionné au-dessus de l'obstacle (3) selon la position longitudinale souhaitée, le vérin (29) de chaque dispositif d'inclinaison (11) peut être actionné afin de régler l'inclinaison du support de charge (2), en faisant pivoter le support de charge (2) vers le bas ou vers le haut autour de son point de fixation articulé à chaque chariot mobile (35). L'arrière du support de charge (2) est préférentiellement pivoté vers le bas, notamment afin de rapprocher la partie arrière du support de charge (2) de l'obstacle (3).

On notera qu'en fin de la seconde phase de déplacement des chariots mobiles (35), le vérin de chaque dispositif d'inclinaison (11) est sensiblement vertical et orthogonal au sol, ce qui lui permet là encore de reprendre avec un maximum d'efficacité le poids du véhicule.

Selon une variante préférentielle illustrée sur les figures 13 à 20, l'extrémité inférieure (30) de chacun des vérins (29) des dispositifs d'inclinaison (11) peut avantageusement être reliée, non pas directement, mais par l'intermédiaire d'une bielle (61) à une partie fixe du véhicule de transport (5). Cette bielle (61) comporte une première extrémité (62) fixée de façon pivotante au châssis du véhicule, et une seconde extrémité (63) fixée de façon pivotante à l'extrémité inférieure (30) du vérin (29).

La seconde extrémité (63) de la bielle (61) est fixée à l'extrémité inférieure (30) du vérin (29) par une articulation pivot (64) dont l'axe (65) peut avantageusement être reçu et maintenu de manière amovible dans le logement ouvert (66) d'une chape (67) s'élevant du châssis du véhicule.

Cette variante permet d'éviter au système de se retrouver dans une configuration hyperstatique, dans laquelle les vérins (29) ou le support de charge (2) pourraient se retrouver endommagés en cas de contraintes trop importantes pendant le déplacement du support de charge (2).

Le fonctionnement avantageux de cette variante a été illustré sur les figures 13 à 20.

Comme représenté sur la figure 13, lorsque le support de charge (2) est en position limite basse, par exemple pour être chargé ou déchargé, la partie arrière du support de charge (2) repose sur la surface (56), de préférence par ses roulettes qui sont en appui sur les longerons (68) du plateau supérieur (69) du véhicule. Comme exposé précédemment, la tige des vérins (29) des dispositifs d'inclinaison (11) se trouve alors préférentiellement en position sortie, au maximum de sa course.

Avantageusement avec cette variante, la bielle (61) peut pivoter autour de sa première extrémité (62) afin de relever légèrement sa seconde extrémité (63) et ainsi faire sortir l'axe (65) de l'articulation (64) hors de la chape (67). L'extrémité inférieure (30) du vérin (29) se retrouve libérée, ce qui limite les contraintes dans le vérin (29).

Lorsque le chariot mobile (35) se déplace le long du chemin de roulement (34) pour faire monter la partie avant du support de charge (2), la partie arrière du support de charge (2) commence par glisser ou rouler vers l'avant sur la surface (56).

Pendant cette première phase, représentée sur la figure 14, les vérins (29) avancent légèrement vers l'avant du véhicule. La bielle (61) pivote alors autour de sa première extrémité (62) pour reposer sa seconde extrémité (63), jusqu'à ramener l'axe (65) de l'articulation (64) dans le logement ouvert (66) de la chape (67). L'extrémité inférieure (30) du vérin (29) se retrouve alors maintenue pivotante sur le châssis du véhicule, comme dans la variante précédente.

Lorsque le chariot mobile (35) poursuit son mouvement vers le haut, puis l'avant, le long du chemin de roulement (34) et continue à faire monter le support de charge (2), la partie arrière du support de charge (2) décolle de la surface (56), comme représenté sur la figure 15. Les vérins (29) se retrouvent alors en compression et travaillent comme des bielles de longueur fixe. Les vérins (29) pivotent autour de l'articulation pivot (64) de leur extrémité inférieure (30), dont l'axe (65) est maintenu dans le logement ouvert (66) de la chape (67).

Une fois arrivés en position sensiblement verticale, les vérins (29) peuvent être actionnés pour faire rentrer leur tige et ainsi modifier l'inclinaison du support de charge (2).

Avantageusement, la présence de la bielle (61) permet en outre de donner le jeu nécessaire au niveau des vérins (29) pour limiter les contraintes et éviter d'endommager les vérins, le support de charge ou leurs fixations, si par exemple la tige des vérins (29) n'a pas été complètement sortie avant de placer le support de charge (2) en position limite basse, ou si en raison des tolérances de fabrication les positions relatives entre la surface d'appui (56), l'extrémité inférieure (30) des vérins (29) et celle (39) du chemin de roulement (34) sont inadaptées.

Enfin, la présence de la bielle (61) confère un avantage supplémentaire au véhicule selon l'invention qui a été illustré sur la figure 16. En effet, il est possible avec cette variante se soulever le plateau supérieur (69) du véhicule, même si le support de charge (2) est en position limite basse et en appui sur celui par sa partie arrière.

Dans ce cas, le moyen de levage (70) du plateau supérieur (69) soulève simultanément le plateau supérieur (69) et le support de charge (2) en appui sur celui-ci. La bielle (61) pivote autour de sa première extrémité (62) et sa seconde extrémité (63) se soulève. La bielle (61) continue à pivoter après la sortie de l'axe (65) hors de la chape (67). La bielle (61) vient ainsi prolonger la longueur du vérin (29), qui ne peut plus s'étendre car déjà en extension maximale, et donne la longueur supplémentaire nécessaire pour autoriser ce mouvement.

Dans cette configuration, le support de charge (2) prolonge vers l'avant le plateau supérieur (69). L'ensemble support de charge/plateau supérieur forme une zone de chargement prolongée qui permet avantageusement de transporter des charges plus longues, telles que des châssis cabine par exemple. Cette zone de chargement prolongée peut être facilement chargée et déchargée à plat et en position basse. Elle peut ensuite être soulevée pour permettre une imbrication optimale des charges transportées sur plusieurs niveaux.

Même si cette variante à bielle (61) n'a été représentée que combinée avec le second mode de réalisation des dispositifs de déplacement (9) à chemin de roulement (34) et chariot mobile (35), il est évident qu'elle est également compatible avec le premier mode de réalisation des dispositifs de déplacement (9) à bras pivotants (15) et que son fonctionnement et ses avantages sont similaires.

De la même façon, cette variante à bielle (61) est compatible avec un troisième mode de réalisation des dispositifs de déplacement (9) décrit ci-après.

Selon ce troisième mode de réalisation de l'invention non représenté sur les figures, chaque chariot mobile (35) n'est pas déplacé par un mécanisme à lien souple (42) mais par un mécanisme à crémaillère, chaque chariot mobile (35) étant alors équipé de son propre moteur pour le déplacer le long du chemin de roulement (34). Selon ce troisième mode de réalisation, les montants (14) sont similaires à ceux du second mode de réalisation de l'invention représenté sur les figures 6 à 12, hormis le fait qu'ils ne comportent pas de mécanisme à lien souple (42).

Selon cette variante où un mécanisme à crémaillère déplace les chariots mobiles (35), chaque chariot mobile (35) est équipé d'au moins une roue dentée et d'un moteur pour entraîner ladite roue dentée à rotation. Des orifices, des dents, une chaîne sont prévu(e)s ou des moyens similaires sont prévus le long du chemin de roulement (34) pour que les dents de la roue dentée puissent s'engrener avec ceux-ci. Ainsi, lorsque le moteur est actionné, la roue dentée entre en rotation et roule le long du chemin de roulement (34), avec ses dents engrenées avec les orifices, les dents ou la chaîne, ce qui entraîne le chariot mobile (35) en déplacement le long dudit chemin de roulement (34).

Selon un mode de réalisation préféré de l'invention, le chariot mobile (35) peut être équipé d'un dispositif antichute qui immobilise ledit chariot mobile (35) en cas de défaillance du mécanisme à lien souple ou du mécanisme à crémaillère, par exemple en cas de rupture du lien souple ou d'un pignon.

Il est évident pour l'homme du métier que l'ensemble de déplacement (1) d'une charge (4) décrit précédemment, quel que soit son mode de réalisation, permet également de déplacer le support de charge (2) depuis une position limite haute située au-dessus de l'obstacle (3) jusqu'à une position limite basse située à l'arrière dudit obstacle (3). Il suffit pour cela de réaliser les étapes inverses de celles décrites précédemment.

## Revendications

1. Véhicule de transport (5) de charges (4) comportant un ensemble de déplacement (1) d'une charge (4) apte à faire passer la charge d'une position limite basse située à l'arrière d'un obstacle (3) à une hauteur inférieure à 2 mètres du sol, jusqu'à au moins une position limite haute située à l'avant de la position limite basse et à une hauteur supérieure à celle de l'obstacle (3), ledit obstacle (3) étant une partie de la structure du véhicule de transport (5) ou une zone de chargement du véhicule susceptible de contenir une autre charge (4), **caractérisé en ce que** l'ensemble de déplacement (1) comporte les moyens suivants :
- un support de charge (2) sensiblement plat et destiné à supporter la charge (4) pendant son déplacement entre la position limite basse et la position limite haute ;
- deux dispositifs de déplacement (9), prévus de part et d'autre du support de charge (2), chacun d'un côté du véhicule de transport (5) ; chaque dispositif de déplacement (9) étant fixé pivotant à la partie avant du support de charge (2), de sorte que le support de charge (2) puisse pivoter par rapport aux dispositifs de déplacement (9) autour d'un premier axe horizontal transversal à la direction générale du véhicule, les deux dispositifs de déplacement (9) comportant chacun un actionneur (10) ou un actionneur commun capable de provoquer le déplacement du support de charge (2) à la fois vers le haut et vers l'avant du véhicule de transport (5) pour le faire passer de la position limite basse à la position limite haute ;
- deux dispositifs d'inclinaison (11), distincts des dispositifs de déplacement (9), prévus de part et d'autre du support de charge (2), chacun d'un côté du véhicule de transport (5), chaque dispositif d'inclinaison (11) étant fixé pivotant à la partie arrière du support de charge (2), de sorte que le support de charge (2) puisse pivoter par rapport aux dispositifs d'inclinaison (11) autour d'un second axe transversal à la direction générale du véhicule et parallèle au premier axe transversal, les deux dispositifs d'inclinaison (11) comportant chacun un actionneur (12) capable de provoquer le pivotement du support de charge (2) autour du premier axe transversal de sorte à régler l'angle d'inclinaison du support de charge (2) par rapport au plan général de chargement du véhicule de transport (5).

2. Véhicule de transport (5) de charges (4) selon la revendication 1, **caractérisé en ce que** les deux dispositifs de déplacement (9) déplacent le support de charge (2) pour le faire passer de la position limite basse à la position limite haute, selon une trajectoire au moins partiellement courbe.

3. Véhicule de transport (5) de charges (4) selon la revendication 1 ou la revendication 2, **caractérisé en ce que** chaque dispositif de déplacement (9) comprend les moyens suivants :
- un montant (14) vertical latéral situé à l'arrière de l'obstacle (3) ;
- un bras pivotant (15) dont une partie inférieure (17) est fixée pivotante au montant (14) et dont une partie supérieure (16) est fixée pivotante au support de charge (2) ;
- un vérin (20) monté pivotant sur le montant (14) et relié pivotant à un système de bielles (21) relié au montant (14) et au bras pivotant (15) ;
ces moyens étant prévus de sorte que lorsque le vérin (20) est actionné, le bras pivotant (15) pivote par rapport au montant (14) et déplace le support de charge (2) vers le haut et vers l'avant selon une trajectoire courbe.

4. Véhicule de transport (5) de charges (4) selon la revendication 3, **caractérisé en ce que** la partie inférieure (17) et la partie supérieure (16) du bras pivotant sont sensiblement rectilignes et reliées selon un angle obtus non plat, et **en ce que**, en position limite haute du support de charge (2), l'extrémité de la partie supérieure (16) du bras pivotant (15) opposée à l'angle s'étend vers l'avant.

5. Véhicule de transport (5) de charges (4) selon la revendication 3 ou la revendication 4, **caractérisé en ce que** le système de bielles (21) comprend une bielle supérieure (22) et une bielle inférieure (23) reliées pivotantes entre elles par une articulation (24), la bielle supérieure (22) étant reliée pivotante au bras pivotant (15) tandis que la bielle inférieure (23) est reliée pivotante au montant (14), et **en ce que** le vérin (20) est relié pivotant à ladite articulation (24).

6. Véhicule de transport (5) de charges (4) selon l'une quelconque des revendications 3 à 5, **caractérisé en ce que** le dispositif de déplacement (9) est prévu de sorte que la trajectoire courbe forme sensiblement un demi-cercle ou une demi-ellipse.

7. Véhicule de transport (5) de charges (4) selon la revendication 1 ou la revendication 2, **caractérisé en ce que** chaque dispositif de déplacement (9) comprend les moyens suivants :
- un chemin de roulement (34), sensiblement en forme de L et présentant une première partie (36) sensiblement rectiligne et sensiblement verticale s'étendant vers le bas à l'arrière de l'obstacle (3), ainsi qu'une seconde partie (37) sensiblement rectiligne et sensiblement horizontale s'étendant vers l'avant au-dessus de l'obstacle (3) ;
- un chariot mobile (35) logé déplaçable dans le chemin de roulement (34) et fixé de manière articulée au support de charge (2), dans la moitié avant de celui-ci ;
- un ensemble de motorisation prévu pour déplacer le chariot mobile (35) le long du chemin de roulement (34).

8. Véhicule de transport (5) de charges (4) selon la revendication 7, **caractérisé en ce que** l'extrémité inférieure de la première partie (36) du chemin de roulement (34) est située à une hauteur inférieure ou sensiblement égale à la hauteur du support de charge (2) lorsque celui-ci est dans la position limite basse et **en ce que** l'extrémité avant de la seconde partie (37) du chemin de roulement (34) est située sensiblement au niveau du support de charge (2) lorsque celui-ci est dans une position limite haute.

9. Véhicule de transport (5) de charges (4) selon l'une quelconque des revendications 7 à 8, **caractérisé en ce que** le chemin de roulement (34) comprend un système de guidage (54) comprenant deux rails ou glissières de guidage (55', 55") parallèles et parallèles au chemin de roulement (34).

10. Véhicule de transport (5) de charges (4) selon l'une quelconque des revendications 7 à 9, **caractérisé en ce que** l'ensemble de motorisation comporte un mécanisme à lien souple (42) comprenant :
- un lien souple (43), qui est de préférence une chaîne, une courroie, un câble ou une combinaison de ceux-ci, et qui est fixé au chariot mobile (35) et forme une boucle fermée dont au moins une partie (44) est logée dans le chemin de roulement (34) ;
- des roues ou pignons (45) autour desquel(le)s le lien souple (43) est engagé ;
- un système de motorisation (47) apte à entraîner au moins un(e) roue ou pignon en rotation, de sorte d'entraîner le lien souple (43) en déplacement autour desdit(e)s roues ou pignons (45).

11. Véhicule de transport (5) de charges (4) selon la revendication 10, **caractérisé en ce qu'**il comporte un système de motorisation (47) commun pour les deux mécanismes à lien souple (42), ledit système de motorisation (47) comprenant un moteur (48) hydraulique ou électrique associé à un réducteur (49) comportant deux sorties d'arbres latérales, et une barre de transmission (50) transversale reliée aux roues ou pignons (45) motorisé(e)s.

12. Véhicule de transport (5) de charges (4) selon l'une quelconque des revendications 7 à 9, **caractérisé en ce que** l'ensemble de motorisation comprend un mécanisme à crémaillère comprenant :
- au moins une roue dentée comportant des dents, qui est fixée au chariot mobile (35) et entraînée à rotation par un moteur logé dans le chariot mobile (35) ; et
- des moyens complémentaires aux dents de la roue dentés prévus le long du chemin de roulement (34) ;
les dents de la roue dentée étant prévues pour venir s'engager avec lesdits moyens complémentaires de sorte que le chariot mobile (35) se déplace dans le chemin de roulement (34) lorsque son moteur est actionné.

13. Véhicule de transport (5) de charges (4) selon l'une quelconque des revendications 7 à 12, **caractérisé en ce que** le chariot mobile (35) comprend un dispositif antichute qui immobilise ledit chariot mobile (35) en cas de défaillance de l'ensemble de motorisation.

14. Véhicule de transport (5) de charges (4) selon l'une quelconque des revendications 7 à 13, **caractérisé en ce que** le chariot mobile (35) comprend un moyen de glissement, de roulement ou de guidage (52) dans le chemin de roulement (34).

15. Véhicule de transport (5) de charges (4) selon l'une quelconque des revendications précédentes, **caractérisé en ce que** la partie arrière du support de charge (2) est équipée de patins, de roulettes ou de galets.

16. Véhicule de transport (5) de charges (4) selon l'une quelconque des revendications précédentes, **caractérisé en ce que** l'actionneur (12) de chaque dispositif d'inclinaison (11) est un vérin (29) dont une première extrémité inférieure (30) est reliée pivotante, directement ou par l'intermédiaire d'une bielle (61), à une partie fixe du véhicule de transport (5), et dont la seconde extrémité supérieure (31) est reliée pivotante au support de charge (2).

17. Véhicule de transport (5) de charges (4) selon l'une quelconque des revendications précédentes, **caractérisé en ce que** l'obstacle (3) est la cabine du véhicule de transport (5) ou une zone de chargement susceptible de contenir une voiture.

## Patentansprüche

1. Transportfahrzeug (5) für Lasten (4) mit einer Umsetzungseinheit (1) für eine Last (4), die in der Lage ist, die Last aus einer unteren Grenzposition, die sich auf der hinteren Seite eines Hindernisses (3) befindet in eine Höhe von weniger als 2 Metern vom Boden, bis zu mindestens einer oberen Grenzposition, die sich vor der unteren Grenzposition befindet und höher ist als die des Hindernisses (3) zu bringen, dieses Hindernis (3) ist dabei Teil der Konstruktion des Transportfahrzeugs (5) oder einer Ladezone des Fahrzeugs, die eine andere Last (4), enthalten könnte, **dadurch gekennzeichnet, dass** die Umsetzungseinheit (1) die folgenden Mittel enthält:
- einen Lastenträger (2), im Wesentlichen flach und dazu bestimmt die Last (4) während des Umsetzens zwischen der unteren Grenzposition und der oberen Grenzposition zu tragen:
- zwei Umsetzvorrichtungen (9), vorgesehen beiderseits des Lastenträgers (2), jede auf einer Seite des Transportfahrzeugs(5); jede Umsetzvorrichtung (9) ist dabei schwenkbar am vorderen Teil des Lastenträgers (2) befestigt, so dass der Lastenträger (2), bezogen auf die Umsetzvorrichtungen (9) um eine erste horizontale Achse, quer zur Transportfahrzeugs (5) geschwenkt werden kann, die beiden Umsetzvorrichtungen (9) enthalten jede einen Stellantrieb (10) oder einen gemeinsamen Stellantrieb, der die Bewegung des Lastenträgers (2) zugleich nach oben und nach vorne des Transportfahrzeugs (5) veranlassen kann, damit er aus der unteren Grenzposition in die obere Grenzposition gelangt;
- zwei Neigevorrichtungen (11), vorgesehen beiderseits des Lastenträgers (2), jede auf einer Seite des Transportfahrzeugs(5); jede Neigevorrichtung (11),) ist dabei schwenkbar am Vorderteil des Lastenträgers (2) befestigt, so dass der Lastenträger (2) bezogen auf die Neigevorrichtung (11), um eine zweite horizontale Achse, quer zur allgemeinen Richtung des Fahrzeugs und parallel zur ersten Querachse, geschwenkt werden kann, die beiden Neigevorrichtungen (11), enthalten jede einen Stellantrieb (11) oder einen gemeinsamen Stellantrieb, der die Neigung des Lastenträgers (2) um die erste Querachse veranlassen kann, und so den Neigungswinkel des Lastenträgers (2) bezogen auf die allgemeine Ladungsebene des Transportfahrzeugs (5) einstellen kann.

2. Transportfahrzeug (5) für Lasten (4) nach Anspruch 1, **dadurch gekennzeichnet, dass** die beiden Umsetzvorrichtungen (9) den Lastenträger (2) verschieben, so dass er entlang einem zumindest teilweisen gekrümmten Pfad aus einer unteren Grenzposition in die obere Grenzposition gelangt.

3. Transportfahrzeug (5) für Lasten (4) nach Anspruch 1 oder Anspruch 2, **dadurch gekennzeichnet, dass** jede Umsetzvorrichtung (9) die folgenden Mittel enthält:
- einen vertikalen Seitenpfosten (14), der sich im hinteren Teil des Hindernisses (3) befindet;
- einen Schwenkarm (15), dessen unterer Teil (17) schwenkbar am Pfosten (14) befestigt ist und dessen oberer Teil (16) schwenkbar am Lastenträger (2) befestigt ist;
- eine Zylinderstange (20), schwenkbar am Pfosten (14) montiert und schwenkbar mit einem Stangensystem (21) verbunden, das mit dem Pfosten (14) und dem Schwenkarm (15) verbunden ist;
diese Mittel sind so vorgesehen, dass wenn die Zylinderstange (20) betätigt wird, der Schwenkarm (15) bezogen auf den Pfosten (14) schwenkt und den Lastenträger (2) nach oben und vorne, entlang eines gekrümmten Pfades bewegt.

4. Transportfahrzeug (5) für Lasten (4) nach Anspruch 3, **dadurch gekennzeichnet, dass** der untere Teil (17) und der obere Teil (16) des Schwenkarms im Wesentlichen geradlinig sind und in einem stumpfen, nicht flachen Winkel verbunden sind und dadurch, dass in der oberen Grenzposition des Lastenträgers (2), das Ende des oberen Teils (16) des Schwenkarms (15), das gegenüber dem Winkel liegt, nach vorne verläuft.

5. Transportfahrzeug (5) für Lasten (4) nach Anspruch 3 oder Anspruch 4, **dadurch gekennzeichnet, dass** das Stangensystem (21) eine obere Stange (22) und eine untere Stange (23) umfasst, die untereinander schwenkbar über ein Gelenk (24) verbunden sind, die obere Stange (22) ist dabei schwenkbar mit dem Schwenkarm (15) verbunden, während die untere Stange (23) schwenkbar mit dem Pfosten (14) verbunden ist und dadurch, dass die Zylinderstange (20) schwenkbar mit diesem Gelenk (24) verbunden ist.

6. Transportfahrzeug (5) für Lasten (4) nach irgendeinem der vorstehenden Ansprüche 3 bis 5, **dadurch gekennzeichnet, dass** die Umsetzvorrichtung (9) so vorgesehen ist, dass der kurvenförmige Pfad im Wesentlichen einen Halbkreis oder eine Halbellipse bildet.

7. Transportfahrzeug (5) für Lasten (4) nach Anspruch 1 oder Anspruch 2, **dadurch gekennzeichnet, dass** jede Umsetzvorrichtung (9) die folgenden Mittel enthält:
- eine Lauffläche (34), im Wesentlichen in Form eines L und mit einem ersten Teil (36), der im Wesentlichen geradlinig und im Wesentlichen vertikal ist und nach unten hinter das Hindernis (3) führt, sowie einen zweiten Teil, (37) der im Wesentlichen geradlinig und im Wesentlichen horizontal ist und nach vorne über das Hindernis (3) führt,
- ein beweglicher Wagen (35) verschiebbar in der Lauffläche (34) untergebracht und über Gelenk mit dem Lastenträger (2), in dessen vorderer Hälfte verbunden;
- eine Motoreinheit, vorgesehen um den beweglichen Wagen (35) entlang der Lauffläche (34) zu bewegen.

8. Transportfahrzeug (5) für Lasten (4) nach Anspruch 7, **dadurch gekennzeichnet, dass** sich das untere Ende des ersten Teils (36) der Lauffläche (34) in einer Höhe befindet, die niedriger oder im Wesentlichen gleich der Höhe des Lastenträgers (2) ist, wenn dieser sich in der unteren Grenzposition befindet und dadurch dass das vordere Ende des zweiten Teils (37) der Lauffläche (34) sich im Wesentlichen in Höhe des Lastenträgers (2) befindet, wenn dieser in einer oberen Grenzposition steht.

9. Transportfahrzeug (5) für Lasten (4) nach irgendeinem der vorstehenden Ansprüche 7 bis 8, **dadurch gekennzeichnet, dass** die Lauffläche (34) ein Führungssystem (54) umfasst, das zwei Führungsschienen (55', 55") enthält, die parallel zueinander und parallel zur Lauffläche (34) sind.

10. Transportfahrzeug (5) für Lasten (4) nach irgendeinem der vorstehenden Ansprüche 7 bis 9, **dadurch gekennzeichnet, dass** die Motoreinheit einen Mechanismus mit flexibler Verbindung (42) enthält, der umfasst:
- eine flexible Verbindung (43), bei der es sich vorzugsweise um eine Kette, einen Riemen, ein Seil oder eine Kombination daraus handelt, die am beweglichen Wagen (35) befestigt ist und eine geschlossene Schleife bildet, von der mindestens ein Teil (44) in der Lauffläche (34) untergebracht ist;
- Räder oder Zahnräder (45) um die die flexible Verbindung (43) gespannt ist;
- ein Antriebssystem (47), das in der Lage ist mindestens ein Rad oder Zahnrad in Drehung zur versetzen, so dass die flexible Verbindung (43) um diese Räder oder Zahnräder (45) in Bewegung versetzt wird.

11. Transportfahrzeug (5) für Lasten (4) nach Anspruch 10, **dadurch gekennzeichnet, dass** es ein gemeinsames Antriebssystem (47) für die beiden Mechanismen mit flexibler Verbindung (42) enthält, dieses Antriebssystem (47) enthält einen Hydraulik- oder Elektromotor (48), verbunden mit einer Untersetzung (49) mit zwei Seitenwellenausgängen und einer Getriebewelle (50) in Querrichtung, verbunden mit den motorgetriebenen Rädern oder Zahnrädern (45).

12. Transportfahrzeug (5) für Lasten (4) nach irgendeinem der vorstehenden Ansprüche 7 bis 9, **dadurch gekennzeichnet, dass** die Motoreinheit einen Mechanismus mit Zahnstange (42) enthält, der umfasst:
- mindestens ein Zahnrad, mit Zähnen, das am beweglichen Wagen (35) befestigt ist und durch einen Motor angetrieben wird, der im beweglichen Wagen (35) untergebracht ist; und
- Mittel in Ergänzung der Zähne des Zahnrades, die entlang der Lauffläche (34) vorgesehen sind:
die Zähne des Zahnrades sind dazu vorgesehen, in diese zusätzlichen Mittel zu greifen, so dass der bewegliche Wagen (35) sich über die Lauffläche (34) bewegt, wenn sein Motor betätigt wird.

13. Transportfahrzeug (5) für Lasten (4) nach irgendeinem der vorstehenden Ansprüche 7 bis 12, **dadurch gekennzeichnet, dass** der bewegliche Wagen (35) eine Absturzvorrichtung umfasst, die diesen beweglichen Wagen (35) bei einem Ausfall der Antriebseinheit stilllegt.

14. Transportfahrzeug (5) für Lasten (4) nach irgendeinem der vorstehenden Ansprüche 7 bis 13, **dadurch gekennzeichnet, dass** der bewegliche Wagen (35) eine Gleit-, Roll- oder Führungsvorrichtung (52) in der Lauffläche (34) enthält.

15. Transportfahrzeug (5) für Lasten (4) nach irgendeinem der vorstehenden Ansprüche **dadurch gekennzeichnet, dass** der hintere Teil des Lastenträgers (2) mit Kufen, Rollen oder Laufrollen ausgerüstet ist.

16. Transportfahrzeug (5) für Lasten (4) nach irgendeinem der vorstehenden Ansprüche, **dadurch gekennzeichnet, dass** das Stellglied (12) jeder Neigevorrichtung (11) eine Zylinderstange (29) ist, deren erstes unteres Ende (30) schwenkbar direkt oder über eine Stange (61), mit einem festen Teil des Transportfahrzeugs (5) verbunden ist und deren zweites, oberes Ende (31) schwenkbar mit dem Lastenträger (2) verbunden ist.

17. Transportfahrzeug (5) für Lasten (4) nach irgendeinem der vorstehenden Ansprüche, **dadurch gekennzeichnet, dass** es sich bei dem Hindernis (3) um die Kabine des Transportfahrzeugs (5) handelt oder um eine Ladezone, die ein Fahrzeug enthalten könnte.

## Claims

1. A vehicle (5) for transporting loads (4) comprising an assembly (1) for moving a load (4) capable of causing the load to pass from a low limit position located at the rear of an obstacle (3) at a height of less than 2 meters from the ground, to at least one high limit position located at the front of the low limit position and at a height greater than that of the obstacle (3), said obstacle (3) being a part of the structure of the transport vehicle (5) or a loading zone of the vehicle capable of containing another load (4), **characterised in that** the movement assembly (1) comprises the following means:
- a load support (2) substantially flat and intended to support the load (4) during its movement between the low limit position and the high limit position;
- two movement devices (9), provided on either side of the load carrier (2), each on one side of the transport vehicle (5); each movement device (9) being pivotally fixed to the front part of the load carrier (2), so that the load carrier (2) can pivot with respect to the movement devices (9) about a first horizontal axis transverse to the general direction of the vehicle, the two movement devices (9) each comprising an actuator (10) or a common actuator capable of causing the load carrier (2) to be moved both upwardly and forwardly of the transport vehicle (5) from the low limit position to the high limit position;
- two tilting devices (11), separate from the movement devices (9), provided on either side of the load carrier (2), each on one side of the transport vehicle (5), each tilting device (11) being pivotally fixed to the rear part of the load carrier (2), so that the load carrier (2) can pivot with respect to the tilting devices (11) about a second axis transverse to the general direction of the vehicle and parallel to the first transverse axis, the two tilting devices (11) each comprising an actuator (12) capable of causing the load carrier (2) to pivot about the first transverse axis so as to adjust the tilting angle of the load carrier (2) with respect to the general loading plane of the transport vehicle (5).

2. The vehicle (5) for transporting loads (4) according to claim 1, **characterised in that** the two movement devices (9) move the load carrier (2) from the low limit position to the high limit position along an at least partially curved path.

3. The vehicle (5) for transporting loads (4) according to claim 1 or claim 2, **characterised in that** movement device (9) comprises the following means:
- a vertical lateral upright (14) located at the rear of the obstacle (3);
- a pivoting arm (15) of which a lower part (17) is pivotally fixed to the upright (14) and of which an upper part (16) is pivotally fixed to the load support (2);
- a cylinder (20) pivotally mounted on the upright (14) and pivotally connected to a connecting rod system (21) connected to the upright (14) and to the pivoting arm (15); these means being provided so that when the cylinder (20) is actuated, the pivoting arm (15) pivots with respect to the upright (14) and moves the load support (2) upwards and forwards along a curved path.

4. The vehicle (5) for transporting loads (4) according to claim 3, **characterised in that** the lower part (17) and the upper part (16) of the pivoting arm are substantially rectilinear and connected at a non-flat obtuse angle, and **in that**, in the high limit position of the load support (2), the end of the upper part (16) of the pivoting arm (15) opposite to the angle extends forwardly.

5. The vehicle (5) for transporting loads (4) according to claim 3 or claim 4, **characterised in that** the connecting rod system (21) comprises an upper connecting rod (22) and a lower connecting rod (23) pivotally connected to one another by a hinge(24), the upper connecting rod (22) being pivotally connected to the pivoting arm (15) while the lower connecting rod (23) is pivotally connected to the upright (14), and **in that** the cylinder (20) is pivotally connected to said hinge (24).

6. The vehicle (5) for transporting loads (4) according to any one of claims 3 to 5, **characterised in that** the movement device (9) is provided in such a manner that the curved path substantially forms a semicircle or a half-ellipse.

7. The vehicle (5) for transporting loads (4) according to claim 1 or claim 2, **characterised in that** each movement device (9) comprises the following means:
- a substantially L-shaped raceway (34) having a first substantially rectilinear and substantially vertical portion (36) extending rearwardly downward of the obstacle (3), and a second substantially rectilinear and substantially horizontal portion (37) extending forwardly above the obstacle (3);
- a movable carriage (35) movably housed in the track (34) and hingedly fixed to the load carrier (2) in the front half thereof;
- a motorisation assembly provided to move the movable carriage (35) along the raceway (34).

8. The vehicle (5) for transporting loads (4) according to claim 7, **characterised in that** the lower end of the first portion (36) of the raceway (34) is situated at a height that is less than or substantially equal to the height of the load support (2) when the latter is in the low limit position, and **in that** the front end of the second portion (37) of the raceway (34) is situated substantially at the level of the load support (2) when the latter is in a high limit position.

9. The vehicle (5) for transporting loads (4) according to any one of claims 7 to 8, **characterised in that** the raceway (34) comprises a guide system (54) comprising two guide rails or slides (55', 55") parallel and parallel to the raceway (34).

10. The vehicle (5) for transporting loads (4) according to any one of claims 7 to 9, **characterised in that** the motorisation assembly comprises a flexible link mechanism (42) comprising:
- a flexible link (43), which is preferably a chain, a belt, a cable or a combination thereof, and which is fixed to the movable carriage (35) and forms a closed loop of which at least a portion (44) is housed in the raceway (34);
wheels or gears (45) around which the flexible link (43) is engaged;
- a motorisation system (47) capable of driving at least one wheel or pinion in rotation, so as to drive the flexible link (43) in movement around said wheels or pinions (45).

11. The vehicle (5) for transporting loads (4) according to claim 10, **characterised in that** it comprises a common motorisation system (47) for the two flexible link mechanisms (42), said motorisation system (47) comprising a hydraulic or electric motor (48) associated with a reduction gear (49) comprising two lateral shaft outputs, and a transverse transmission bar (50) connected to the motorised wheels or pinions (45).

12. The vehicle (5) for transporting loads (4) according to any one of claims 7 to 9, **characterised in that** the motorization assembly comprises a rack-and-pinion mechanism comprising:
- at least one toothed wheel comprising teeth, which is fixed to the mobile carriage (35) and driven in rotation by a motor housed in the mobile carriage (35); and
- means complementary to the teeth of the toothed wheel provided along the raceway (34);
the teeth of the toothed wheel being designed to engage with said complementary means so that the movable carriage (35) moves in the raceway (34) when its motor is actuated.

13. The vehicle (5) for transporting loads (4) according to any one of claims 7 to 12, **characterised in that** the movable carriage (35) comprises a fall-protection device that immobilizes said movable carriage (35) in the event of failure of the motorisation assembly.

14. The vehicle (5) for transporting loads (4) according to any one of claims 7 to 13, **characterised in that** the mobile carriage (35) comprises sliding, rolling or guiding means (52) in the raceway (34).

15. The vehicle (5) for transporting loads (4) according to any one of the preceding claims, **characterised in that** the rear part of the load support (2) is equipped with skids, casters or rollers.

16. The vehicle (5) for transporting loads (4) according to any one of the preceding claims, **characterised in that** the actuator (12) of each tilting device (11) is a cylinder(29), a first lower end (30) of which is pivotally connected, directly or via a connecting rod (61), to a fixed part of the transport vehicle (5), and the second upper end (31) of which is pivotally connected to the load support (2).

17. The vehicle (5) for transporting loads (4) according to any one of the preceding claims, **characterised in that** the obstacle (3) is the cabin of the transport vehicle (5) or a loading zone capable of containing a car.
